(19) Europäisches Patentamt
European Patent Office
Office européen des brevets

(11) EP 4 074 718 A1

(12) **EUROPÄISCHE PATENTANMELDUNG**

(43) Veröffentlichungstag:
**19.10.2022 Patentblatt 2022/42**

(21) Anmeldenummer: **21168539.1**

(22) Anmeldetag: **15.04.2021**

(51) Internationale Patentklassifikation (IPC):
***C07F 9/141*** *(2006.01)* ***C08K 5/524*** *(2006.01)*
***C08K 5/529*** *(2006.01)*

(52) Gemeinsame Patentklassifikation (CPC):
(C-Sets verfügbar)
**C07F 9/1412; C08K 5/529** (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **LANXESS Deutschland GmbH**
**50569 Köln (DE)**

(72) Erfinder:
- **BIENMÜLLER, Dr. Matthias**
  **47803 Krefeld (DE)**
- **IMMEL, Dr. Timo**
  **41472 Neuss-Grefrath (DE)**
- **KOERTE, Dr. Leif-Arne**
  **41468 Neuss (DE)**
- **SCHMID-DAEHLING, Dr. Claudia**
  **41539 Dormagen (DE)**

(54) **STABILISATOREN FÜR POLYMERE**

(57) Die Erfindung betrifft neue Phosphorigsäureester der allgemeinen Formel (I),

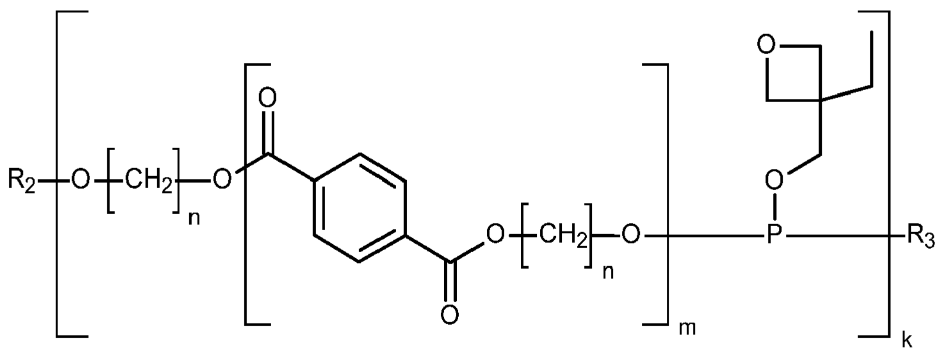

(I)

ferner Polymere, vorzugsweise Thermoplaste, enthaltend die neuen Phosphorigsäureester der allgemeinen Formel (I), ein Verfahren zur Stabilisierung von Polymeren, vorzugsweise von Thermoplasten, sowie die Verwendung dieser Phosphorigsäureester der Formel (I) als Stabilisatoren von Polymeren, vorzugsweise zur Stabilisierung von Thermoplasten.

EP 4 074 718 A1

(52) Gemeinsame Patentklassifikation (CPC): (Forts.)

C-Sets
**C08K 5/529, C08L 67/02;**
**C08K 5/529, C08L 69/00**

## Beschreibung

Die Erfindung betrifft neue Phosphorigsäureester der allgemeinen Formel (I),

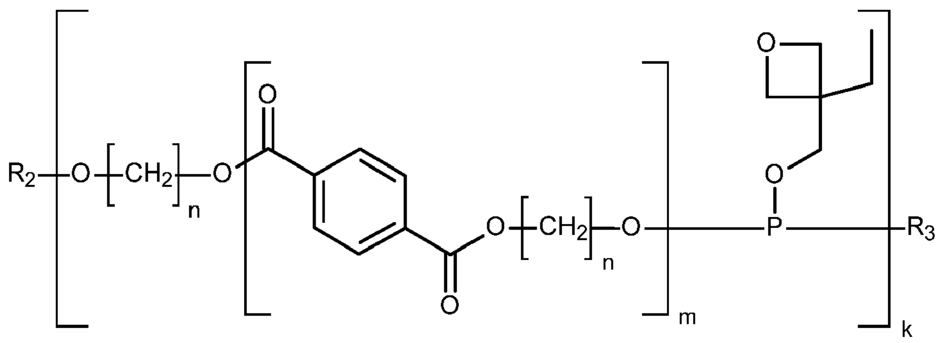

(I)

Polymere, vorzugsweise Thermoplaste, enthaltend neue Phosphorigsäureester der allgemeinen Formel (I), ein Verfahren zur Stabilisierung von Polymeren, vorzugsweise von Thermoplasten, sowie die Verwendung dieser Phosphorigsäureester der Formel (I) als Stabilisatoren von Polymeren, vorzugsweise zur Stabilisierung von Thermoplasten.

## Stand der Technik

DE 10231334 A1 beschreibt den Einsatz polymerer Phosphorigsäureester unter anderem zur thermischen Stabilisierung als auch zur Hydrolysestabilisierung von Polyester-basierten Formmassen und daraus herzustellender Erzeugnisse. Typische Anwendungen für auf diese Weise stabilisierte Polyester sind Erzeugnisse der Elektronikindustrie, Elektroindustrie, Haushaltswaren, Kfz-Industrie, Medizintechnik und Telekommunikationsindustrie. Insbesondere Polycarbonat, aber auch Polybutylenterephthalat, werden in diesen Anwendungen in unverstärkter, in glasfaserverstärkter, in flammgeschützter und/oder in elastomermodifizierter Form eingesetzt, sei es in nur einem Polymer oder in Blends mit anderen Polymeren oder Thermoplasten. Gerade für diese Anwendungen werden hohe Beständigkeiten bei Langzeittemperaturbelastungen und gegen Hydrolyseeinfluss gefordert.

Bevorzugte Stabilisatoren sind dabei gemäß DE 10231334 A1 polymere Phosphorigsäureester, die pro Molekül mindestens eine Oxetangruppe enthalten und von denen 50 % oder mehr aller Moleküle mindestens vier Monomere aus der Gruppe eines zwei- oder mehrwertigen Phenols und/oder Esters der phosphorigen Säure enthalten. Kennzeichnend für den aromatischen Teil der polymeren Phosphorigsäureester gemäß DE 10231334 A1 ist ein aromatischer Rest, der sich von Aromaten mit 2 phenolischen Hydroxylgruppen ableitet. Vorzugsweise werden deshalb in DE 10231334 A1 für die Synthese der polymeren Phosphorigsäureester aromatische Reste abgeleitet von Hydrochinon, Resorcin, Brenzcatechin, Di-t-butylbrenzcatechin, 4,4'-Dihydroxydiphenyl, Bis-(hydroxy-phenyl)-alkane, insbesondere $C_1$-$C_8$-Alkylen- bzw. $C_2$-$C_8$-Alkylidenbisphenole, Bis-(hydroxyphenyl)-cycloalkane, insbesondere $C_5$-$C_{15}$-Cycloalkylen- bzw. $C_5$-$C_{15}$-Cycloalkylenbisphenole, a,a'-Bis-(hydroxyphenyl)-diisopropylbenzol sowie die entsprechenden kernalkylierten bzw. kernhalogenierten Verbindungen, insbesondere Bis-(4-hydroxy-phenyl)-propan-2,2 (Bisphenol A), Bis-(4-hydroxy-3,5-dichlorphenyl)-propan-2,2 (Tetrachlorbisphenyl A), Bis-(4-hydroxy-3,5-dibromophenyl)-propan-2,2 (Tetrabrombisphenol A), Bis-(4-hydroxy-3,5-dimethyl-phenyl)-propan-2,2 (Tetramethylbisphenol A), Bis-(4-hydroxy-3-methylphenyl-propan-2,2-cyclohexan-1,1 (Bisphenol Z) sowie a,a'-Bis-(4-hydroxy-phenyl)-p-diisopropyl-benzol, Dihydroxynaphthaline und Dihydroxyanthracene eingesetzt.

Besonders bevorzugt sind gemäß DE 10231334 A1 polymere Phosphorigsäureester, die folgendes Strukturelement enthalten:

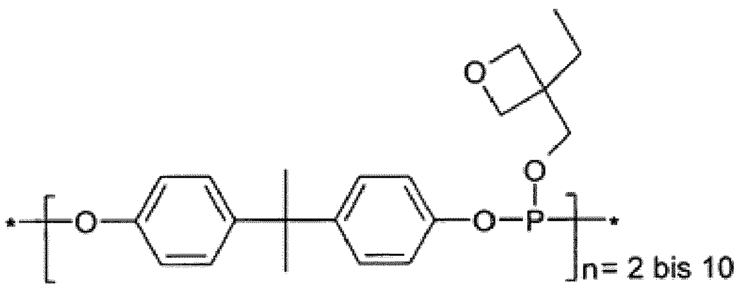

Dieses Strukturelement ist kennzeichnend für das als Polyesterstabilisator etablierte Handelsprodukt **"Additiv DP0001"** [CAS Nr. 649560-74-7], das gemäß Produktdatenblatt auch als Phosphorsäuretriphenylesterpolymer mit 4,4'-(1-methylethyliden)bis[phenol], 3-ethyl-3-oxetanyl)methylester bezeichnet wird. Gemäß DE 10231334 A1 wird das **Additiv DP0001** durch Umsetzung von Triphenylphosphit mit 3-Ethyl-3-hydroxymethyloxetan, Bisphenol A und Natriumphenolat unter Stickstoffatmosphäre hergestellt. Wird Additiv DP0001 in Mengen von 0,1 Gew.-% eingesetzt in 99,5 Gew.-% Polybutylenterephthalat, so zeigten spritzgegossene Formkörper auf Basis von Formmassen gemäß DE 10231334 A1 nach Heißluftalterung über einen Zeitraum von 336 Stunden und von 672 Stunden, sowie nach Wasserdampflagerung über einen Zeitraum von 72 Stunden, von 168 Stunden und von 240 Stunden, höhere Reißdehnungen im Zugversuch und/oder niedrigere COOH-Endgruppengehalteim Vergleich zu spritzgegossenen Formkörpern auf Basis von Formmassen enthaltend lineares Polybutylenterephthalat und Stabilisator S1 Phosphorigsäure-(1-methethyliden)di-4,1-phenylen-tetrakis(3-ethyl-(3-oxetanyl)methyl)ester [CAS Nr.53184-75-1] oder spritzgegossene Formkörper auf Basis von Formmassen enthaltend lineares Polybutylenterephthalat und als Stabilisator S2 nicht oxetanfunktionalisierten Phosphorigsäureester Tetra-kis(2,4-di-tert.-butylphenyl)(1,1-biphenyl)4,4'-**diylbiphosphonit**).

Nachteilig am **Additiv DP 0001** gemäß DE 10231334 A1 ist jedoch, dass es auf Bisphenol A basiert. Daher sind im **Additiv DP 0001** Spuren von nicht abreagiertem, freiem Bisphenol A enthalten. Zudem kann aus **Additiv DP 0001** in dem Moment, wo es als Stabilisator seine chemische Wirkung entfacht, zusätzlich Bisphenol A freigesetzt werden. Beides erschwert den Einsatz des **Additivs DP 001,** da freies Bisphenol A in Polymeren, insbesondere Thermoplasten, zunehmend unerwünscht ist.

Ausgehend von DE 10231334 A1 bestand deshalb die Aufgabe der vorliegenden Erfindung darin, alternative Stabilisatoren bereit zu stellen, die frei von der Chemikalie Bisphenol A sind, aber verglichen zum **Additiv DP 0001** in darauf basierenden Polymererzeugnissen zum einen keine Nachteile bei der Wärmeformbeständigkeit sowie bei der Kerbschlagzähigkeit aufweisen. Zum anderen sollen derartige Stabilisatoren den damit stabilisierten Polymeren, insbesondere Thermoplasten, bei deren Verarbeitung, insbesondere im Spritzguss, durch Extrusion oder Blasformen, zu einer gegenüber dem Additiv DP 0001 verbesserten Schmelzestabilität und Umesterungsstabilität verhelfen. Schließlich sollen die erfindungsgemäß erhaltenen Erzeugnisse selbst gegenüber mit Additiv DP 0001 stabilisierten Erzeugnissen eine verbesserte Farbstabilität und nach Möglichkeit eine verbesserte Hydrolysestabilität zeigen.

Es wurde nun gefunden, dass Phosphorigsäureester der allgemeinen Formel (I)

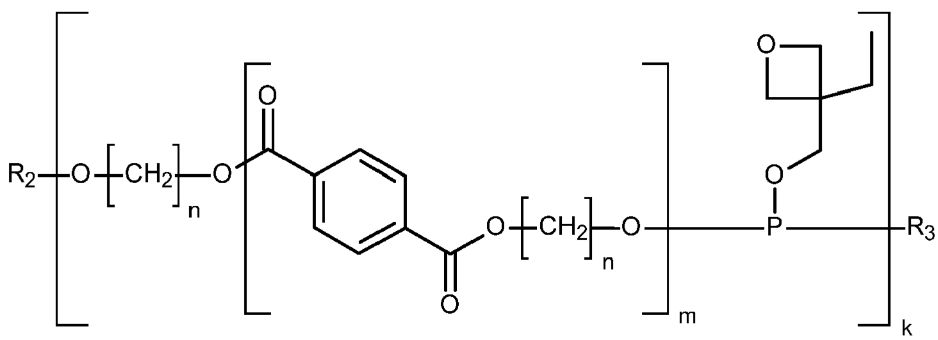

(I)

worin n für natürliche Zahlen von 2 bis 12 steht,
m für 0 oder für eine Zahl größer 0 bis 30 steht,
k für eine Zahl im Bereich von 1 bis 200 steht,
$R_2$ für einen kovalent gebundenen Rest,

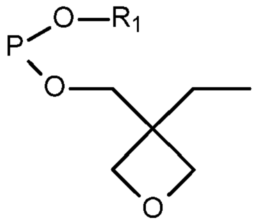
,
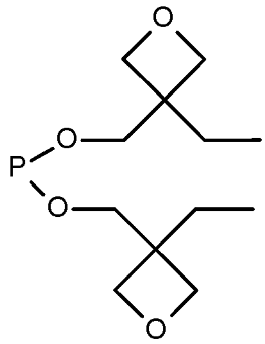
,
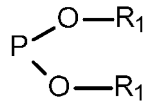

oder Wasserstoff steht, und
$R_3$ für einen kovalent gebundenen Rest O-H, O-$R_1$,

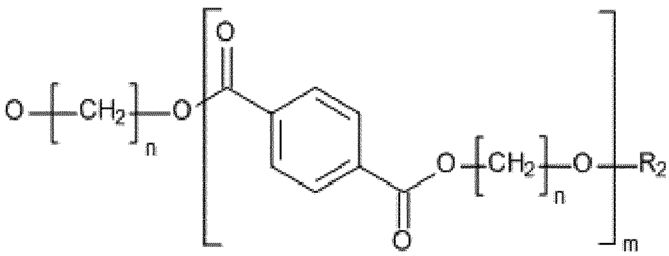

oder

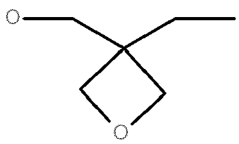

steht, worin
n, m, $R_2$ die oben genannten Bedeutungen haben und
$R_1$ für geradkettiges und/oder verzweigtes und/oder substituiertes $C_1$-$C_{10}$-Alkyl, Aryl-$C_1$-$C_{10}$-Alkyl und/oder für Aryl steht,
die vorgenannten Aufgaben lösen.

Die erfindungsgemäßen Phosphorigsäureester der allgemeinen Formel (I) sind frei von Bisphenol A und ihr Einsatz in Polymeren, insbesondere Thermoplasten, als Stabilisator führt überraschenderweise nicht zu Einbußen bei der Wärmeformbeständigkeit sowie bei der Kerbschlagzähigkeit in Erzeugnissen auf Basis dieser Polymere im Vergleich zum **Additiv DP 0001.** Die erfindungsgemäßen Phosphorigsäureester der allgemeinen Formel (I) verhelfen den auf diese Weise stabilisierten Polymeren, insbesondere Thermoplasten, bei deren Verarbeitung, insbesondere im Spritzguss, durch Extrusion oder Blasformen, zu einer im Vergleich zum **Additiv DP 0001** deutlich verbesserten Schmelzestabilität und Umesterungsstabilität, wobei die Erzeugnisse selbst im Vergleich zu Erzeugnissen die mit **Additiv DP 0001** stabilisiert werden, eine deutlich verbesserte Farbstabilität aufweisen.

Das Ziel der Messung der Wärmeformbeständigkeit gemäß der Methode nach VICAT besteht in der quantitativen Charakterisierung der Wärmeformbeständigkeit eines Kunststoffes. Es erfolgt dazu die Bestimmung der Erweichungstemperatur VICAT (englisch: VICAT Softening Temperature, auch abgekürzt "VST") , die methodisch bedingt quantitativ nicht mit der durch andere experimentelle Methoden ermittelten Wärmeformbeständigkeitstemperaturen (wie z.B. der Wärmeformbeständigkeitstemperatur HDT) übereinstimmen muss. Die Norm **DIN EN ISO 306 [2]** legt vier Verfahren zur Bestimmung der VICAT-Erweichungstemperatur fest, die nach der gewählten Prüflast und der Heizrate bezeichnet werden. Im Rahmen der vorliegenden Erfindung wird **Verfahren B 120** mit einer Kraft von 50 N und einer Heizrate von 120 °C/h angewendet. Dabei wird die Temperatur in °C bestimmt, bei der eine Eindringspitze 1 mm tief in die Oberfläche eines Prüfkörpers eingedrungen ist. Die Eindringspitze hat einen kreisförmigen Querschnitt von 1 $mm^2$ Fläche. Die gemessene Temperatur wird als VICAT Softening Temperature VST bezeichnet. Für die Prüfung werden

im Rahmen der vorliegenden Erfindung spritzgegossene Prüfkörper verwendet. Die Oberflächen müssen eben und parallel sowie gratfrei sein. Für einzusetzende VICAT-Prüfgeräte und weitere Details/Literatur sei auf **https://wiki.polymerservice-merseburg.de/index.php/Vicat-Erweichungstemperatur** verwiesen.

Zur Ermittlung der Kerbschlagzähigkeit nach Izod werden im Rahmen der vorliegenden Erfindung spritzgegossene Prüfkörper in einer Anordnung nach dem 3-Punkt-Biegeversuch beansprucht, wobei die Norm **DIN EN ISO 180 /1A** zugrunde gelegt wird. Wenn die Proben spröde genug sind, zerbrechen diese. Die Prüfung erfolgt bei Raumtemperatur von +23°C +/-2°C, siehe:

**https://www.ulttc.com/de/leistungen/pruefverfahren/mechanische/charpy.html**

Gemäß R.D.Maier, M.Schiller, Handbuch Kunststoff-Additive, 4. Aufl., Hanser Verlag 2016, S. 33 werden Polymere mit verschiedensten Techniken zu Endartikeln verarbeitet. Beispiele dafür sind Mahlen, Kneten, Kalandrieren, Extrudieren und Spritzgießen. In all diesen Verfahren bestimmen drei Hauptfaktoren die Geschwindigkeit des Polymerabbaus: hohe Temperaturen, Scherkräfte und die unvermeidbare Gegenwart geringer Mengen Sauerstoff. Die Verarbeitung hat nicht nur einen entscheidenden Einfluss auf die physikalischen Eigenschaften des Polymers, sie bestimmt auch dessen Stabilität während der darauffolgenden Einsatzzeit. Bereits ein geringfügiger chemischer Abbau während der Verarbeitung kann zu erheblichen Alterungseffekten im Endartikel führen. Die chemischen Ursachen dafür sind die Bildung sauerstoffbasierter funktioneller Gruppen, beispielsweise Carbonyl- oder Peroxygruppen, ungesättigte Bindungen, sowie Änderungen der molaren Masse des Polymers, verursacht durch Kettenspaltung oder Vernetzung. Eine praxisnahe Methode zur Ermittlung der Verarbeitungsstabilität von Polymeren während der Verarbeitung sind Mehrfachextrusionen mit Ein- oder Doppelschneckenextrudern. Die Schmelzeigenschaften werden üblicherweise über die Bestimmung von Schmelzflussindex (MFR, Schmelze-Massenflussrate, oder MVR, Schmelze-Volumenfließrate) gemäß **ISO 1133** charakterisiert.

Das Fließverhalten eines thermoplastischen Kunststoffs wird durch den Schmelzindex charakterisiert. Je nach Prüfverfahren wird entweder die Masse pro Zeiteinheit (MFR-Messung) oder das Volumen pro Zeiteinheit (MVR-Messung) ermittelt. Die Schmelzindexmessung ist ein standardisiertes Prüfverfahren, um die Fließfähigkeit von Kunststoffen bei einer definierten Temperatur und konstant wirkender Kraft zu charakterisieren. Das zu untersuchende Polymer bzw. der zu untersuchende Kunststoff wird in einem Kanal zum Schmelzen gebracht. Das Auflegen eines Gewichtes bewirkt einen konstanten Druck auf die Polymer-/ Kunststoffschmelze. Am unteren Ende des Prüfkanals befindet sich eine standardisierte Kapillare, durch welche die Polymer-/Kunststoffschmelze extrudiert wird. Während des Versuchs wird nach einer vorgeschriebenen Aufschmelzzeit gemessen, wieviel Material pro Zeiteinheit durch die Düse gedrückt wird. Die Prüftemperatur und das Belastungsgewicht wird stets mit dem Ergebnis angegeben und hängt vom Material ab. Das Prüfverfahren ist als Qualitätsmerkmal etabliert. Bereits minimale Schwankungen in der Molekulargewichtsverteilung können identifiziert werden.

Die Bestimmung der thermoplastischen Fließfähigkeit bzw. Schmelzvolumenfliessrate MVR wird im Rahmen der vorliegenden Erfindung nach **ISO 1133 Verfahren B** an einem Fließprüfgerät B4106.200 der Fa. Zwick/Roell durchgeführt. Dabei wird das extrudierte Volumen je Zeiteinheit über die Geschwindigkeit des Stempels in $cm^3$/10 min bestimmt, wobei die MVR-Werte nach 5 min und nach 20 min Verweilzeit bei 270 °C gemessen werden. Je kleiner der Unterschied zwischen dem 5 min MVR-Wert und dem 20 min MVR-Wert ist, desto besser ist die Schmelzestabilität. Die Berechnung des Unterschieds (Anstieg MVR) erfolgt im Rahmen der vorliegenden Erfindung nach:

$$Anstieg\ MVR = 100\% \cdot \frac{MVR_{20min} - MVR_{5min}}{MVR_{5min}}$$

Die Schmelzestabilität ist umso besser, je geringer der Anstieg des MVR ist.

Ein Maß für die Wirkung eines Stabilisators gegen Umesterung lässt sich aus DSC-Untersuchungen ableiten, wobei DSC für Dynamische Differenzkalorimetrie steht. In der Praxis hat sich folgendes Vorgehen bewährt, bei dem der Unterschied zwischen dem Schmelzpeak des 3. Aufheizvorgangs zum Schmelzpeak des 1. Aufheizvorgangs in der DSC gemessen wird. Unter Stickstoffatmosphäre (70 ml/min) werden 0,01 - 0,015g der zu untersuchenden Probe von 0°C auf 300°C mit einem Gradienten von +20 K/min erhitzt und anschließend von 300°C auf 0°C mit einem Gradienten von -10 K/min wieder abgekühlt und für 2 min auf 0°C gehalten (K = Kelvin). Dieser Vorgang wird noch zweimal wiederholt (insgesamt dreimal Aufheizen und zweimal Abkühlen). Vom endothermen Signal des Aufheizvorgangs wird das Maximum bestimmt, welches dem Schmelzpeak des in der zu untersuchenden Probe eingesetzten Polymers bzw. Thermoplasten entspricht. Je niedriger die Differenz zwischen dem Schmelzpeak des 3. Aufheizvorgangs zum Schmelzpeak des 1. Aufheizvorgangs ist, desto besser ist die DSC-Stabilität der zu untersuchenden Probe. Im Falle von Polyestern und Polyalkylenterephthalat-Polycarbonat-Blends entspricht die DSC-Stabilität einer Stabilität gegen Umesterung.

Der Abbau von Polymeren bei hohen Temperaturen und längeren Verweilzeiten kann zu einer Verfärbung der Kunststoffe führen. Es tritt Vergilbung auf, die bis hin zu starker Braun- bis Schwarzfärbung führen kann. Ein Maß für die Stabilisierungswirkung eines Stabilisators ist daher die Reduzierung der Vergilbungsneigung unter den Bedingungen

einer Heißluftalterung. Wird diese Vergilbungsneigung unterdrückt, spricht man von einer verbesserten Farbstabilität. Die Farbstabilität wird im Rahmen der vorliegenden Erfindung beschrieben durch |ΔL*|.

Der Lab-Farbraum (auch: CIELAB, CIEL*a*b*, Lab-Farben) beschreibt die wahrnehmbaren Farben. Er nutzt einen dreidimensionalen Farbenraum, bei dem der Helligkeitswert L* senkrecht auf der Farbebene (a,b) steht. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a-Koordinate gibt die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können zwischen -128 und 127 variiert werden. Die Farbstabilität von Polymeren kann durch die Veränderung der Helligkeit L* über die Lagerungszeit bei erhöhter Temperatur bestimmt werden. Im Rahmen der vorliegenden Erfindung erfolgt die Heißluftalterung durch Lagerung von spritzgegossenen Platten von 60mm • 40mm • 4 mm in einem Materialprüfschrank des Modells Binder FP115 bei Umluft bei erhöhter Temperatur für eine Zeitdauer von t Stunden. Es werden die Helligkeitswerte L* nach Heißluftalterung für t Stunden (abgekürzt durch L*t) und vor der Heißluftalterung (abgekürzt durch L*0) bestimmt (**DIN EN ISO 11664-4**). Als Maß für die Farbstabilität wird im Rahmen der vorliegenden Erfindung die Differenz ΔL* aus L*(t) und L*(0) gebildet und über den Betrag als positive Zahl ausgedrückt:

$$|\Delta L^*| = |L^*t - L^*0|$$

Je kleiner |ΔL*| ist, desto geringer ist das Ausmaß der Vergilbung und umso besser ist damit die Farbstabilität.

Die Farbmessung erfolgt im Rahmen der vorliegenden Erfindung mit dem Spektralfotometer CM-2600d der Fa. Konica Minolta mit der CIE Normlichtart D65 in Reflektion (10° Beobachterwinkel) mit Glanzeinschluss SCI=Specular Component Included).

**Erfindung**

Lösung der Aufgabe und somit Gegenstand der Erfindung sind **Phosphorigsäureester** der allgemeinen Formel (I)

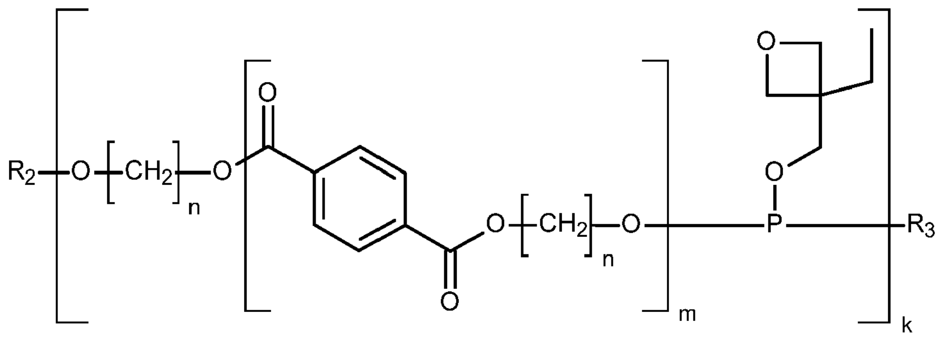

(I)

worin n für natürliche Zahlen von 2 bis 12 steht,

m für 0 oder für eine Zahl größer 0 bis 30 steht,

k für eine Zahl im Bereich von 1 bis 200 steht,

$R_2$ für einen kovalent gebundenen Rest,

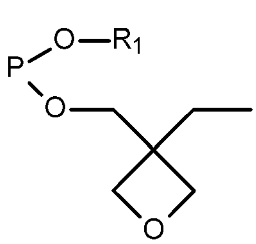 , 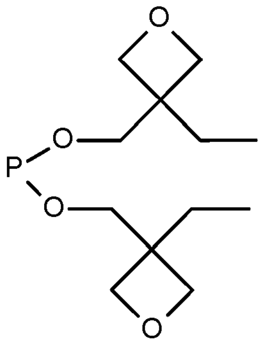 , 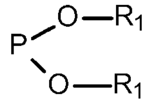

oder Wasserstoff steht, und

$R_3$ für einen kovalent gebundenen Rest O-H, O-$R_1$,

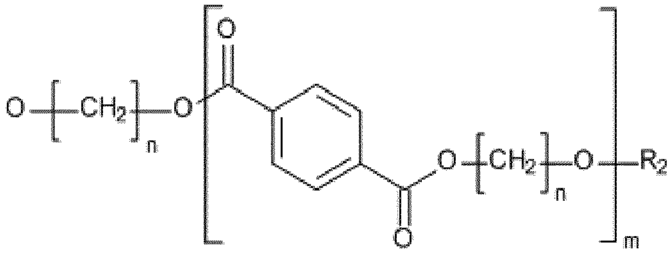

oder

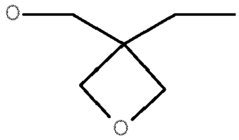

steht, worin

n, m, $R_2$ die oben genannten Bedeutungen haben und

$R_1$ für geradkettiges und/oder verzweigtes und/oder substituiertes $C_1$-$C_{10}$-Alkyl, Aryl-$C_1$-$C_{10}$-Alkyl und/oder für Aryl steht.

Gegenstand der Erfindung sind zudem Polymere, vorzugsweise Thermoplasten, besonders bevorzugt Polyester und insbesondere bevorzugt Polyalkylenterephthalate, Polycarbonate oder Polyalkylenterephthalat-Polycarbonat-Blends, enthaltend wenigstens einen Phosphorigsäureester der allgemeinen Formel (I).

Gegenstand der Erfindung sind auch Erzeugnisse, Formmassen oder Zusammensetzungen enthaltend zusätzlich zum Polymer, vorzugsweise Thermoplasten, besonders bevorzugt Polyester und ganz besonders bevorzugt Polyalkylenterephthalate, Polycarbonate oder Polyalkylenterephthalat-Polycarbonat-Blends, wenigstens einen Phosphorigsäureester der allgemeinen Formel (I).

Gegenstand der Erfindung ist auch die **Verwendung** wenigstens eines Phosphorigsäureesters der allgemeinen Formel (I)

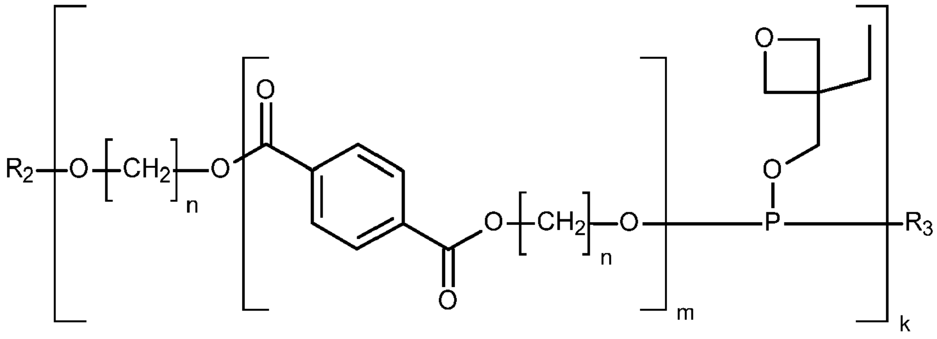

(I)

worin n für natürliche Zahlen von 2 bis 12 steht,

m für 0 oder für eine Zahl größer 0 bis 30 steht,

k für eine Zahl im Bereich von 1 bis 200 steht,

$R_2$ für einen kovalent gebundenen Rest

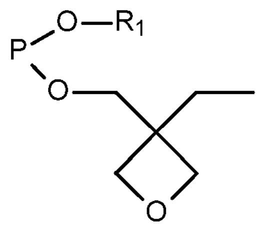

,

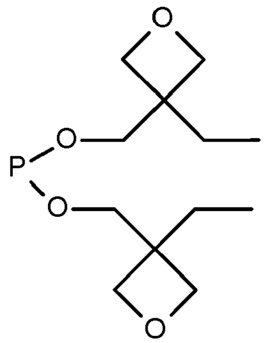

,

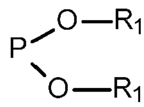

oder Wasserstoff steht, und

$R_3$ für einen kovalent gebundenen Rest O-H, O-$R_1$,

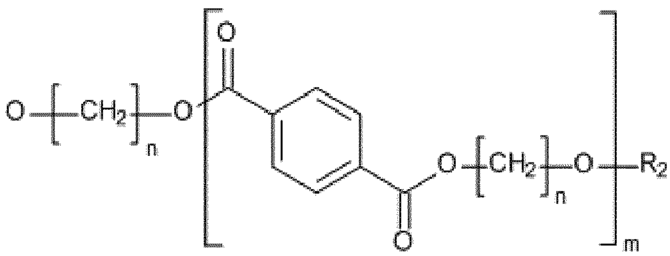

oder

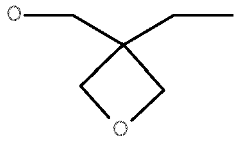

steht, worin

n, m, $R_2$ die oben genannten Bedeutungen haben und

$R_1$ für geradkettiges und/oder verzweigtes und/oder substituiertes $C_1$-$C_{10}$-Alkyl, Aryl-$C_1$-$C_{10}$-Alkyl und/oder für Aryl steht,

als Stabilisatoren von Polymeren, vorzugsweise Thermoplasten, besonders bevorzugt als Stabilisatoren von Polyestern und ganz besonders bevorzugt von Polyalkylenterephthalaten, Polycarbonaten oder Polyalkylenterephthalat-Polycarbonat-Blends.

Gegenstand der Erfindung ist ferner ein **Verfahren** zur Stabilisierung von Polymeren, vorzugsweise von Thermoplasten, besonders bevorzugt von Polyestern und ganz besonders bevorzugt von Polyalkylenterephthalaten, Polycarbonaten oder Polyalkylenterephthalat-Polycarbonat-Blends, indem man wenigstens einen Phosphorigsäureester der allgemeinen Formel (I)

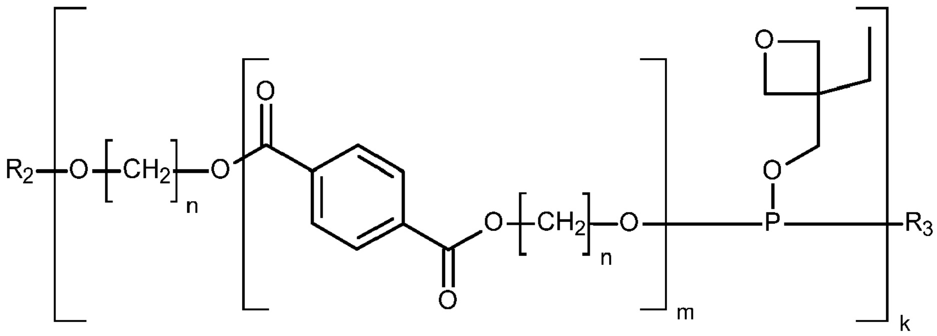

(I)

worin n für natürliche Zahlen von 2 bis 12 steht,

m für 0 oder für eine Zahl größer 0 bis 30 steht,

k für eine Zahl im Bereich von 1 bis 200 steht,

$R_2$ für einen kovalent gebundenen Rest,

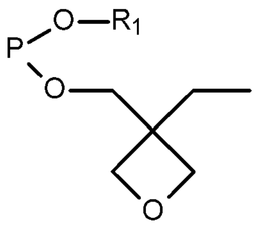 , 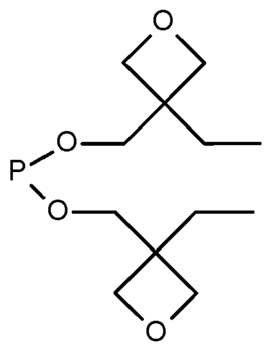 , 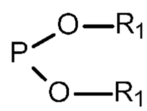

oder Wasserstoff steht, und

$R_3$ für einen kovalent gebundenen Rest O-H, O-$R_1$,

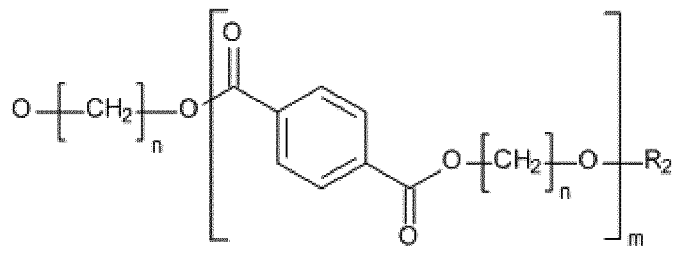

oder

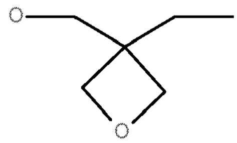

steht, worin

n, m, $R_2$ die oben genannten Bedeutungen haben und

$R_1$ für geradkettiges und/oder verzweigtes und/oder substituiertes $C_1$-$C_{10}$-Alkyl, Aryl-$C_1$-$C_{10}$-Alkyl und/oder für Aryl steht,

mit dem Polymer, bevorzugt mit dem Thermoplasten, insbesondere mit dem Polyester bzw. dem Polyalkylenterephthalat und/oder Polyalkylenterephthalat-Polycarbonat-Blend und gegebenenfalls weiteren Komponenten in wenigstens einem Mischwerkzeug mischt und die dabei entstehende Formmasse enthaltend wenigstens die Komponenten

A) Polymer, bevorzugt Thermoplast(en), insbesondere Polyester bzw. Polyalkylenterephthalat, Polycarbonat oder Polyalkylenterephthalat-Polycarbonat-Blend und

B) Phosphorigsäureester gemäß der allgemeinen Formel (I)

im Spritzguss, durch Extrusion oder Blasformen zu Erzeugnissen, vorzugsweise zu Erzeugnissen der Elektronikindustrie, der Elektroindustrie, in Haushaltswaren, in der Kfz-Industrie, in der Medizintechnik, in der Telekommunikationsindustrie oder in der Elektromobilität verarbeitet.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere die angegebenen Massenanteile hinsichtlich der Zusammensetzungen, der erfindungsgemäß beschriebenen Verwendung(en) und der erfindungsgemäß beschriebenen Verfahren. Die im Rahmen dieser Anmeldung genannten Normen beziehen sich auf die zum Anmeldetag dieser Erfindung geltenden Fassung. Gemäß **https://de.wikipedia.org/wiki/Arylgruppe** ist eine **Arylgruppe,** abgekürzt Ar ein organisch-chemischer Rest mit einem aromatischen Grundgerüst. Aryl ist somit die allgemeine Bezeichnung für eine einwertige Atomgruppe, die sich von aromatischen Kohlenwasserstoffen durch Entzug eines an den Ring gebundenen Wasserstoffatoms ableiten. Die meisten Arylreste leiten sich vom Benzol ($C_6H_6$) ab, die einfachste Arylgruppe ist die Phenylgruppe (Ph), (-$C_6H_5$).

## Bevorzugte Ausführungen der Erfindung

Erfindungsgemäß bevorzugt steht in allen Formeln der vorliegenden Erfindung in $R_1$ das Ar für wenigstens einen Rest der Reihe Phenyl, 1-Naphthyl, 2-Naphthyl, 9-Anthryl und 9-Phenanthryl, insbesondere für Phenyl. Bevorzugt steht Aryl-$C_1$-$C_{10}$-Alkyl für Benzyl.

Vorzugsweise enthalten erfindungsgemäße Erzeugnisse, Formmassen oder Zusammensetzungen bezogen auf 100 Massenanteile des als Komponente A) zu stabilisierenden Polymers, vorzugsweise Thermoplasten, besonders bevorzugt Polyesters, insbesondere Polyalkylenterephthalats, Polycarbonats oder Polyalkylenterephthalat-Polycarbonat-Blends, 0,01 bis 5,26 Massenanteile, bevorzugt 0,02 bis 3 Massenanteile des als Komponente B) einzusetzenden Phosphorigsäureesters der allgemeinen Formel (I).

Vorzugsweise enthalten erfindungsgemäße Erzeugnisse, Formmassen oder Zusammensetzungen zusätzlich zur Komponente A) und zur Komponente B) noch **C)** 0,01 bis 280 Massenanteile, bevorzugt 0,01 bis 120 Massenanteile wenigstens eines **Füll- oder Verstärkungsstoffs** bezogen auf 100 Massenanteile der Komponente(n) A).

Vorzugsweise enthalten erfindungsgemäße Erzeugnisse, Formmassen oder Zusammensetzungen zusätzlich zu den Komponenten A), B) und C) oder anstelle von Komponente C) noch **D)** 0,01 bis 46 Massenanteile, bevorzugt 0,01 bis 30 Massenanteile wenigstens eines **Flammschutzmittels** bezogen auf 100 Massenanteile der Komponente(n)

A).

Vorzugsweise enthalten erfindungsgemäße Erzeugnisse, Formmassen oder Zusammensetzungen zusätzlich zu den Komponenten A), B), C) und D) oder anstelle der Komponenten C) und/oder D) noch **E)** 0,01 bis 100 Massenanteile, bevorzugt 0,01 bis 50 Massenanteile wenigstens eines **Elastomermodifikators** bezogen auf 100 Massenanteile der Komponente(n) A).

Vorzugsweise enthalten erfindungsgemäße Erzeugnisse, Formmassen oder Zusammensetzungen zusätzlich zu den Komponenten A), B), C), D) und E) oder anstelle der Komponenten C) und/oder D) und/oder E) noch **F)** 0,01 bis 15 Massenanteile, bevorzugt 0,01 bis 10 Massenanteile wenigstens eines von den Komponenten B), C), D) und E) verschiedenen **Additivs,** bezogen auf 100 Massenanteile der Komponente(n) A).

Erfindungsgemäß umfasst werden deshalb vorzugsweise folgende Kombinationen der einzusetzenden Komponenten: A),B); A),B),C); A),B),D); A),B),E); A),B),F); A),B),C),D); A),B),C),E); A),B),C),F); A),B),D),E); A),B),D),F); A),B),C),D),E); A),B),C),D),F); A),B),C),D),E),F);

**Komponente A)**

Erfindungsgemäß bevorzugt als Komponente A) einzusetzende Polymere sind Thermoplaste, also Kunststoffe, die sich in einem bestimmten Temperaturbereich (*thermo-plastisch*) verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die thermische Zersetzung des Materials einsetzt. Thermoplasten im Sinne der vorliegenden Erfindung sind vorzugsweise auszuwählen aus der Gruppe der technischen Thermoplaste oder der Standard-Thermoplaste gemäß **https://de.wikipedia.org/wiki/Thermoplaste#/media/Datei:Highperformance_thermoplastic s.svg.**

Bevorzugte Thermoplaste sind Polyethylen, Polypropylen, Polyester, Polyoxymethylen (POM), Polyketone sowie deren Mischungen (Blends). Besonders bevorzugt sind Polyester. Insbesondere bevorzugte Polyester sind Polycarbonate oder Polyalkylenterephtalate. Bevorzugte Blends sind Polyalkylenterephthalat-Polycarbonat-Blends. Insbesondere handelt es sich um Thermoplasten die in Erzeugnissen der Elektronikindustrie, Elektroindustrie, Haushaltswaren, Kfz-Industrie, Medizintechnik und Telekommunikationsindustrie eingesetzt werden, vorzugsweise indem sie als Bestandteil von Zusammensetzungen oder Formmassen dem Spritzguss, einer Extrusion oder dem Blasformen unterzogen werden. Die Zubereitung erfindungsgemäßer Thermoplast basierter Zusammensetzungen für die Herstellung von Erzeugnissen der Elektronikindustrie, der Elektroindustrie, für Haushaltswaren, der Kfz-Industrie, der Medizintechnik und der Telekommunikationsindustrie erfolgt durch Mischen der als Edukte einzusetzenden Komponenten A) und B) sowie gegebenenfalls wenigstens eine der weiteren Komponenten C), D), E) und F) in wenigstens einem Mischwerkzeug, vorzugsweise in den oben angegebenen Massenverhältnissen. Das Mischen erfolgt bei Thermoplasten in der Regel bei erhöhten Temperaturen, so dass sich die Komponente A) in geschmolzenem Zustand befindet. Bevorzugt handelt es sich bei dem Mischwerkzeug um einen Extruder (auch Compounder oder Compoundieraggregat genannt), der bevorzugt ein oder zwei Wellen (auch Schnecken genannt) enthält. Durch das Mischen werden als Zwischenprodukte, auf den erfindungsgemäßen Zusammensetzungen basierende, Formmassen erhalten. Diese Formmassen können entweder ausschließlich aus den Komponenten A) und B) bestehen, oder aber zusätzlich noch wenigstens eine weitere der Komponenten C), D), E) und F) enthalten. Diese Formmassen liegen als Zwischenprodukt bevorzugt als Granulat vor, wobei das Granulat bereits ein Erzeugnis darstellt.

Insbesondere bevorzugt als Thermoplast einzusetzende Polyester im Sinne der vorliegenden Erfindung sind Polyalkylenterephthalate oder Polycarbonat. Gemäß **https://de.wikipedia.org/wiki/Polycarbonate** sind Polycarbonate Polyester der Kohlensäure.

Die erfindungsgemäß einzusetzenden Polyester können auch im Gemisch mit anderen Polyestern und/oder weiteren Polymeren eingesetzt werden (Blends). Den erfindungsgemäß einzusetzenden Polyestern können übliche Additive wie z.B. Entformungsmittel, Stabilisatoren und/oder Fließhilfsmittel in der Schmelze zugemischt oder auf der Oberfläche aufgebracht werden.

**Polyalkylenterephthalate als Komponente A)**

Als Komponente A) enthalten erfindungsgemäße Zusammensetzungen vorzugsweise wenigstens einen thermoplastischen Polyester, vorzugsweise wenigstens einen teilaromatischen Polyester.

Erfindungsgemäß als Komponente A) einzusetzende thermoplastische, bevorzugt teilaromatische, Polyester sind vorzugsweise auszuwählen aus der Gruppe der Poly-$C_2$-$C_{10}$-alkylenterephthalate, besonders bevorzugt ausgewählt aus der Gruppe der Polyethylentherephthalate, der Polytrimethylenterephthalate und der Polybutylenterephthalate, besonders bevorzugt der Polybutylenterephthalate und Polyethylenterephthalate, ganz besonders bevorzugt des Polybutylenterephthalats.

Unter teilaromatischen Polyestern versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen **(**Kunststoff-Handbuch, Bd. VIII, S. 695 ff, Karl-Hanser-Verlag, München 1973**).**

Bevorzugte Polyalkylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Die erfindungsgemäß als Komponente A) bevorzugt einzusetzenden Polyalkylenterephthalate können neben Ethylen- bzw. Propandiol-1,3- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, insbesondere Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und 1,6,2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan **(**US 4 035 958 **oder** US 4 176 224**).**

Die Polyalkylenterephthalate können durch Einbau relativ kleiner Mengen 3- oder 4-wertiger Alkohole oder 3- oder 4-basischer Carbonsäuren, wie sie z.B. in der DE-A19 00 270 beschrieben sind, verzweigt werden. Beispiele für bevorzugte Verzweigungsmittel sind Trimesinsäure, Trimellitsäure, Trimethylolethan und Trimethylolpropan und Pentaerythrit.

Bevorzugt werden, nicht mehr als 1 Mol-% des Verzweigungsmittels, bezogen auf die Säurekomponente verwendet.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt werden. Insbesondere bevorzugt werden als Komponente A) Polyethylenterephthalat (PET) oder Polybutylenterephthalat (PBT) oder deren Mischungen eingesetzt.

Bevorzugte Polyalkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Erfindungsgemäß besonders bevorzugt als Komponente A) einzusetzendes Polybutylenterephthalat kann als Pocan® B1600 von der Lanxess Deutschland GmbH, Köln, Deutschland bezogen werden.

Erfindungsgemäß besonders bevorzugt als Komponente A) einzusetzendes Polyethylenterephthalat kann als Polyester Chips PET V004 von der Firma Invista, Wichita, USA bezogen werden.

**Polycarbonat als Komponente A)**

Als Polyester der Komponente A) kann ein Polycarbonat oder eine Mischung von Polycarbonaten eingesetzt werden.

Bevorzugte Polycarbonate sind solche Homopolycarbonate und Copolycarbonate auf Basis der Bisphenole der allgemeinen Formel (II),

HO-Z-OH (II)

worin Z ein divalenter organischer Rest mit 6 bis 30 C-Atomen ist, der eine oder mehrere aromatische Gruppen enthält.

Bevorzugt sind Bisphenole der Formel (IIa)

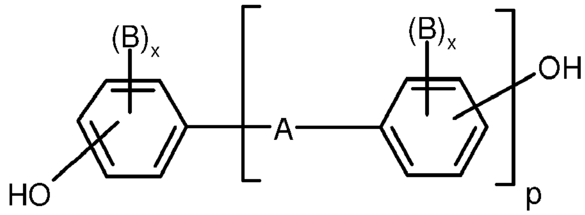

(IIa),

wobei

A eine Einfachbindung, $C_1$-$C_5$-Alkylen, $C_2$-$C_5$-Alkyliden, $C_5$-$C_6$-Cycloalkyliden, -O-, -SO-, - CO-, -S-, $-SO_2-$, $C_6$-$C_{12}$-Arylen, an das weitere aromatische gegebenenfalls Heteroatome enthaltende Ringe kondensiert sein können,

oder ein Rest der Formel (III) oder (IV)

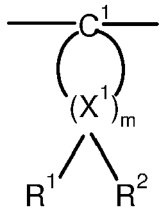

(III)

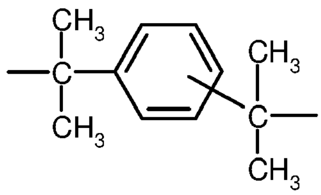

(IV)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R_1$ und $R_2$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^1$ und $R^2$ gleichzeitig Alkyl sind.

Bevorzugte Bisphenole gemäß der allgemeinen Formel (II) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und $\alpha,\alpha'$-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind bevorzugte Ausführungsformen für Bisphenole gemäß der allgemeinen Formel (II).

Besonders bevorzugte Bisphenole gemäß der allgemeinen Formel (II) sind die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-di-isopropylbenzol und Indanbisphenol.

Ganz besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (II) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und **in** D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Erfindungsgemäß als Komponente A) geeignete Polycarbonate haben bevorzugt ein Gewichtsmittel der molaren Masse *M* (SI-Einheit), welches sich z.B. durch Ultrazentrifugation oder Streulichtmessung bestimmen lässt, im Bereich von 10 000 bis 200 000 g/mol. Besonders bevorzugt haben sie ein Gewichtsmittel der molaren Masse im Bereich von 12 000 bis 80 000 g/mol, insbesondere bevorzugt im Bereich von 20 000 bis 35 000 g/mol.

Die mittlere molare Masse erfindungsgemäß als Komponente A) einzusetzender Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind insbesondere Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß als Komponente A) geeigneten Polycarbonate können in bekannter Weise verzweigt sein, und zwar vorzugsweise durch den Einbau von trifunktionellen oder mehr als trifunktionellen Verzweigern. Geeignete Verzweiger sind vorzugsweise solche mit drei oder mehr als drei phenolischen Gruppen oder solche mit drei oder mehr als drei Carbonsäuregruppen.

Geeignete Verzweiger sind insbesondere 1,3,5-Trihydroxybenzol, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und $\alpha,\alpha',\alpha''$-Tris-(4-hydroxyphenol)-1,3,5-triisopropylbenzol.

Insbesondere bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Soweit Verzweiger eingesetzt werden, beträgt deren Menge bevorzugt 0,05 Mol-% bis 2 Mol-%, bezogen auf 100 Mol-% an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe US-A 3 442 864**,** JP-A-14742/72**,** US-A 5 399 659 und DE-A 19 539 290).

Copolycarbonate können ebenfalls als Komponente A) verwendet werden. Copolycarbonate im Sinne der Erfindung sind insbesondere Polydiorganosiloxan-Polycarbonat-Blockcopolymere, deren Gewichtsmittel der molaren Masse M bevorzugt im Bereich von 10 000 bis 200 000 g/mol, besonders bevorzugt im Bereich von 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von $\alpha,\omega$-Bishydroxyaryloxyendgruppen-haltigen Polydiorganosiloxanen mit einem mittleren Polymerisationsgrad von bevorzugt Pn = 5 bis 100, besonders bevorzugt Pn = 20 bis 80, hergestellt werden.

Den als Komponente A) einzusetzenden Polycarbonaten können übliche Additive wie z.B. Entformungsmittel in der Schmelze zugemischt oder auf der Oberfläche aufgebracht werden. Bevorzugt enthalten als Komponente A) zu verwendende Polycarbonate bereits Entformungsmittel vor Compoundierung mit den anderen Komponenten der erfindungsgemäßen Formmassen.

In bevorzugter Ausführungsform enthalten erfindungsgemäße Zusammensetzungen als Komponente A) einen Blend aus wenigstens einem Polyalkylenterephthalat und wenigstens einem Polycarbonat (PC).

Bevorzugte Kombinationen bzw. Blends für Komponente A) sind PC/PET, PC/PBT, PET/PBT, PC/PET/PBT. Erfindungsgemäß besonders bevorzugt sind Mischungen aus Komponente A1) = PC und Komponente A2) = Polyalkylenterephthalat wie PC/PBT und PC/PET, insbesondere solche, bei denen das Gewichts-Verhältnis PC : Polyalkylenterephthalat im Bereich 3:1 bis 1:3 liegt.

Erfindungsgemäß besonders bevorzugt als Komponente A) einzusetzendes Polycarbonat kann als Makrolon® 2405 von der Covestro AG, Leverkusen, Deutschland bezogen werden.

**Komponente B)**

Der als Komponente B) einzusetzende Phosphorigsäureester der allgemeinen Formel (I) ist das Produkt der Kondensationsreaktion eines trisubstituierten Phosphits der allgemeinen Formel (V)

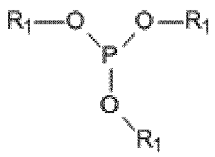

(V)

mit 3-Ethyl-3-hydroxymethyloxetan und einem Reagens der allgemeinen Formel (VI). Die Kondensationsreaktion verläuft unter Abspaltung von $H-O-R_1$.

In Formel (V) steht $R_1$ für geradkettiges und/oder verzweigtes und/oder cyclisches und/oder substituiertes $C_1$-$C_{10}$-Alkyl, Aryl-$C_1$-$C_{10}$-Alkyl und/oder für Aryl. Erfindungsgemäß bevorzugt steht Ar für wenigstens einen Rest der Reihe Phenyl, 1-Naphthyl, 2-Naphthyl, 9-Anthryl und 9-Phenanthryl, insbesondere für Phenyl. Bevorzugt steht Aryl-$C_1$-$C_{10}$-Alkyl für Benzyl. Bevorzugt für $C_1$-$C_{10}$-Alkyl steht Methyl, Ethyl, n-Propyl und iso-Propyl, besonders bevorzugt Methyl. Besonders bevorzugt steht $R_1$ in der allgemeinen Formel (VI) für Phenyl. Dieses **Triphenylphosphit** [CAS Nr. 101-02-0] ist ein farbloser brennbarer Feststoff der durch folgende Reaktion gewonnen werden kann:

$$PCl_3 + 3\ C_6H_5OH \rightarrow P(OC_6H_5)_3 + 3\ HCl$$

Triphenylphosphit kann als ACROS Organics™ von Fisher Scientific GmbH, Schwerte, Deutschland bezogen werden.

**3-Ethyl-3-hydroxymethyloxetan** [CAS Nr. 3047-32-3] kann ebenfalls als Alfa Aesar™ von Fisher Scientific GmbH, Schwerte, Deutschland bezogen werden.

Das Reagens der allgemeinen Formel (VI)

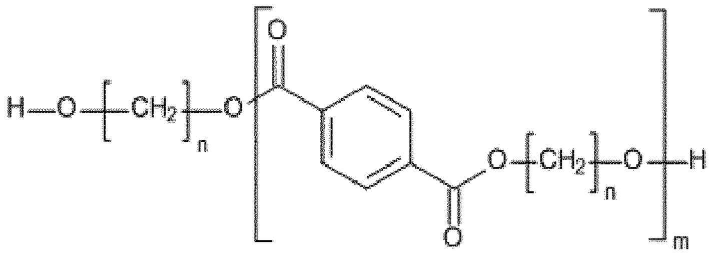

(VI)

steht entweder für $C_2$-$C_{12}$-Alkandiole, wenn m = 0 ist, oder für ein Kondensationsprodukt von Alkandiolen mit Terephthalsäure, wenn m für Zahlen größer 0 bis 12 steht.

Für den Fall m = 0 sind bevorzugte Alkandiole als Reagens (VI) geradkettige und/oder verzweigte und/oder cyclische und/oder substituierte $C_2$-$C_{12}$-Alkandiole, besonders bevorzugt Ethandiol [CAS Nr. 107-21-1], 1,3-Propandiol [CAS Nr. 504-63-2] oder 1,4-Butandiol, insbesondere bevorzugt 1,4-Butandiol [CAS Nr. 110-63-4]. Es können auch Gemische verschiedener Alkandiole als Reagens der Formel (VI) eingesetzt werden. Phosphorigsäureester der allgemeinen Formel (I) können deshalb auf demselben Alkandiol, oder aber auch auf Mischungen unterschiedlicher Alkandiole basieren.

Für den Fall m größer 0 bis 30 basiert das Reagens der Formel (VI) auf einem Kondensationsprodukt von Alkandiolen mit Terephthalsäure unter Abspaltung von Wasser. Hierbei bevorzugte Alkandiole sind geradkettige und/oder verzweigte und/oder cyclische und/oder substituierte $C_2$-$C_{12}$-Alkandiole, besonders bevorzugt Ethandiol [CAS Nr. 107-21-1], 1,3-Propandiol [CAS Nr. 504-63-2] oder 1,4-Butandiol, insbesondere bevorzugt 1,4-Butandiol [CAS Nr. 110-63-4]. Das Reagens der Formel (VI) als Kondensationsprodukt von Alkandiolen mit Terephthalsäure kann auf demselben Alkandiol basieren; es kann aber auch auf Mischungen unterschiedlicher Alkandiole basieren. Anstelle von Terephthalsäure [CAS Nr. 100-21-0] kann zur Herstellung von Reagens (VI) alternativ Dimethylterephthalat [CAS Nr. 120-61-6] eingesetzt werden, wobei bei der Kondensationsreaktion dann Methanol abgespalten wird. Bei der Kondensationsreaktion zur Herstellung des Reagens der Formel (VI) ergibt sich eine Molekulargewichtsverteilung. m ist der mittlere Polymerisationsgrad und beschreibt, wie viele Wiederholungseinheiten das Reagens (VI) durchschnittlich enthält. Die Wiederholungseinheit von (VI) ist definiert als das in der chemischen Formel von (VI) durch die eckigen Klammern umfasste Strukturelement. m ist folgendermaßen definiert: Von dem Zahlenmittel der Molmasse von (VI) wird die Molmasse der Endgruppen, also die Molmasse von $HO-(CH_2)_n-OH$, abgezogen. Anschließend wird die so erhaltene

Molmasse durch die Molmasse der Wiederholungseinheit von (VI) dividiert. Das Ergebnis dieser Division ist m. Das Zahlenmittel der Molmasse kann durch Gelpermeationschromatographie (GPC) bestimmt werden. Insbesondere bevorzugt für das Reagens der Formel (VI) sind Bis(2-hydroxyethyl)terephthalat [CAS Nr. 959-26-2], Bis(3-hydroxpropyl)terephthalat [CAS Nr. 3644-98-2] und Bis(4-hydroxybutyl)terephthalat [CAS Nr. 23358-95-4].

Phosphorigsäureester der allgemeinen Formel (I) mit m größer 0 bis 30 sind erfindungsgemäß bevorzugt gegenüber Phosphorigsäureestern der allgemeinen Formel (I) mit m = 0. Besonders bevorzugt steht m im Phosphorigsäureester der allgemeinen Formel (I) für eine Zahl größer 0 bis 20, insbesondere bevorzugt für eine Zahl im Bereich von 1 bis 10.

Bei der Kondensationsreaktion zur Herstellung der Phosphorigsäureester der allgemeinen Formel (I) ergibt sich eine Molekulargewichtsverteilung. k ist der mittlere Polymerisationsgrad und beschreibt, wie viele Wiederholungseinheiten der Phosphorigsäureester der Formel (I) durchschnittlich enthält, wobei die Wiederholungseinheit von Formel (I) definiert ist als das in der chemischen Formel (I) durch die äußere linke und äußere rechte Klammer umfasste Strukturelement. k ist folgendermaßen definiert: Von dem Zahlenmittel der Molmasse von Formel (I) wird die durchschnittliche Molmasse der Endgruppen $R_2$ und $R_3$ abgezogen. Anschließend wird die erhaltene Molmasse durch die Molmasse der Wiederholungseinheit von Formel (I) dividiert. Das Ergebnis dieser Division ist k. Besonders bevorzugt steht k für eine Zahl im Bereich von 1 bis 100, insbesondere bevorzugt für eine Zahl im Bereich von 1 bis 20.

Der Phosphorigsäureester der allgemeinen Formel (I) kann über die trifunktionelle Phosphinsäure-Einheit verzweigende und vernetzende Strukturelemente enthalten.

**Komponente C)**

In bevorzugter Ausführungsform enthalten erfindungsgemäße Zusammensetzungen als zusätzliche Komponente C) wenigstens einen **Füllstoff oder Verstärkungsstoff** oder eine Mischung aus zwei oder mehr unterschiedlichen Füllstoffen und/oder Verstärkungsstoffen. Ebenfalls in den erfindungsgemäßen Verfahren und Verwendungen kann in bevorzugter Ausführungsform als Komponente C) wenigstens ein Füllstoff oder Verstärkungsstoff eingesetzt werden. Besonders bevorzugt wird wenigstens ein Füll- oder Verstärkungsstoff aus der Gruppe Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln Kohlenstofffasern und Glasfasern eingesetzt. Ganz besonders bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden mineralische teilchenförmige Füllstoffe auf der Basis von Talk, Wollastonit, Kaolin und/oder Glasfasern eingesetzt. Insbesondere ganz besonders bevorzugt sind als Komponente C) Glasfasern.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Bezüglich der besonders bevorzugt als Komponente C) einzusetzenden Glasfasern unterscheidet der Fachmann gemäß **"http://de.wikipedia.org/wiki/Faser-KunststoffVerbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 $\mu$m liegt.

Erfindungsgemäß bevorzugt als Komponente C) einzusetzende Glasfasern sind geschnittene Langglasfasern mit einer mittleren Ausgangslänge im Bereich von 1 bis 50 mm, besonders bevorzugt im Bereich von 1 bis 10 mm, ganz besonders bevorzugt im Bereich von 2 bis 7 mm.

Bevorzugte, als Komponente C) einzusetzende Glasfasern haben einen mittleren Faserdurchmesser im Bereich von 7 bis 18 $\mu$m, besonders bevorzugt im Bereich von 9 bis 15 $\mu$m. Als ein mögliches Verfahren zur Bestimmung der Faserdurchmesser kann dabei die Rasterelektronenmikroskopie (REM) herangezogen werden **(https://de.wikipedia.org/wiki/Rasterelektronenmikroskop).**

Die als Komponente C) vorzugsweise einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der als Komponente C) vorzugsweise einzusetzenden Glasfasern sind Silanverbindungen der allgemeine Formel (VII)

$$(X\text{-}(CH_2)_q)_k\text{-}Si\text{-}(O\text{-}C_rH_{2r+1})_{4-k} \quad (VII)$$

worin

X für $NH_2$-, Carboxyl-, HO- oder

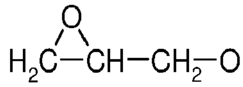

steht,

q in Formel (VII) für eine ganze Zahl von 2 bis 10, bevorzugt 3 bis 4 steht,

r in Formel (VII) für eine ganze Zahl von 1 bis 5, bevorzugt 1 bis 2 steht und

k in Formel (VII) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X in Formel (VII) eine Glycidyl- oder eine Carboxylgruppe enthalten, wobei Carboxylgruppen insbesondere ganz besonders bevorzugt sind.

Für die Ausrüstung der als Komponente C) vorzugsweise einzusetzenden Glasfasern wird der Haftvermittler, bevorzugt die Silanverbindungen gemäß Formel (VII), vorzugsweise in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente C), eingesetzt.

Die als Komponente C) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 $\mu$m bis 300 $\mu$m.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G) mit einer Zusammensetzung gemäß **https://www.r-g.de/wiki/Glasfasern** von 53-55 % $SiO_2$, 14-15 % $Al_2O_3$, 6-8% $B_2O_3$, 17-22% CaO, <5% MgO, <1% $K_2O$ bzw. $Na_2O$ und ca. 1% andere Oxide;
- H-Glas, Hohlglasfasern für reduziertes Gewicht (R&G Glashohlfasergewebe 160 g/$m^2$ und 216 g/$m^2$);
- R, S-Glas, für erhöhte mechanische Anforderungen (S2-Glas von R&G);
- D-Glas, Borsilicatglas für erhöhte elektrische Anforderungen;
- C-Glas, mit erhöhter chemischer Widerstandsfähigkeit;
- Quarzglas, mit hoher Temperaturbeständigkeit.

Weitere Beispiele finden sich unter **"http://de.wikipedia.org/wiki/Glasfaser".** Für die Kunststoffverstärkung haben E-Glasfasern die größte Bedeutung erlangt. Das "E" in E-Glas steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas. Die Festigkeitseigenschaften E-Glas-basierter Glasfasern entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

Bevorzugt werden als Komponente C) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente C) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 μm, besonders bevorzugt bei kleiner 15 μm, insbesondere bevorzugt bei kleiner 10 μm.

Bevorzugt wird als Komponente C) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 μm eingesetzt, bevorzugt im Bereich von 10 bis 150 μm, besonders bevorzugt im Bereich von 15 bis 80 μm, ganz besonders bevorzugt im Bereich von 16 bis 25 μm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist nicht-faserförmiges und nicht-geschäumtes gemahlenes Glas von partikelförmiger, nicht zylindrischer Gestalt das einen mittels Rasterelektronenmikroskopie zu bestimmendes Längen- zu Dickenverhältnis kleiner 5, bevorzugt kleiner als 3, besonders bevorzugt kleiner 2 hat. Der Wert Null ist selbstverständlich ausgeschlossen.

Das als Komponente C) in einer Ausführungsform einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Rasterelektronenmikroskopie zu bestimmenden Längen- zu Durchmesserverhältnis (L/D-Verhältnis) größer 5 aufweist.

Das erfindungsgemäß als Komponente C) in einer Ausführungsform einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Ausgangsmaterialien für die Vermahlung des in einer Ausführungsform als Komponente C) einzusetzenden nicht-faserförmigem und nichtgeschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nicht-gefärbtes Glas als Ausgangsmaterial zum Einsatz als Komponente C) bevorzugt ist.

**Komponente D)**

In bevorzugter Ausführungsform enthalten erfindungsgemäße Zusammensetzungen als zusätzliche Komponente D) wenigstens ein **Flammschutzmittel.** Ebenfalls in den erfindungsgemäßen Verfahren und Verwendungen kann in bevorzugter Ausführungsform als Komponente D) wenigstens ein Flammschutzmittel eingesetzt werden. Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 geeignet, z.B. Triphenylphosphat (TPP), Resorcinol-bis-(diphenylphosphat) einschließlich Oligomere (RDP) sowie Bisphenol-A-bisdiphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind vorzugsweise Antimonverbindungen, insbesondere Antimontrioxid und Antimonpentoxid, Zinkverbindungen, Zinnverbindungen wie Zinnstannat und Borate geeignet. Kohlenstoffbildner und Tetrafluorethylenpolymerisate können ebenfalls zugesetzt werden.

**Komponente E)**

In bevorzugter Ausführungsform enthalten erfindungsgemäße Zusammensetzungen als zusätzliche Komponente E) wenigstens ein oder mehrere Pfropfpolymerisat(e). Ebenfalls in den erfindungsgemäßen Verfahren und Verwendungen kann in bevorzugter Ausführungsform als Komponente E) wenigstens ein oder mehrere Pfropfpolymerisat(e) eingesetzt werden. Die Komponente E) umfasst ein oder mehrere Pfropfpolymerisate von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im allgemeinen eine mittlere Teilchengröße (d50-Wert) im Bereich von 0,05 bis 10 μm, vorzugsweise im Bereich von 0,1 bis 5 μm, besonders bevorzugt im Bereich von 0,2 bis 1 μm.

Monomere E.1 sind vorzugsweise Gemische aus

E.1.1 50 bis 99 Gew.-% Vinylaromaten und/oder kernsubstituierten Vinylaromaten - vorzugsweise Styrol, α-Methylstyrol, p-Methylstyrol, p-Chlorstyrol - und/oder Methacrylsäure-($C_1$-$C_8$)-Alkylester - vorzugsweise Methylmethacrylat, Ethylmethacrylat - und

E.1.2 1 bis 50 Gew.-%n Vinylcyanide (ungesättigte Nitrile wie Acrylnitril und Methacrylnitril) und/oder (Meth)Acrylsäure-($C_1$-$C_8$)-Alkylester - vorzugsweise Methylmethacrylat, n-Butylacrylat, t-Butylacrylat - und/oder Derivate vorzugsweise Anhydride und Imide - ungesättigter Carbonsäuren - vorzugsweise Maleinsäureanhydrid und N-Phenyl-Maleinimid-.

Bevorzugte Monomere E.1.1 sind ausgewählt aus mindestens einem der Monomere Styrol, α-Methyl-styrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die als Komponente E) einzusetzenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist reiner Polybutadienkautschuk. Besonders bevorzugte Polymerisate der Komponente E) sind ABS-Polymerisate (Emulsions-, Masse- und Suspensions-ABS), wie sie in der DE-A 2 035 390 oder in der DE-A 2 248 242 bzw. in Ullmann, Enzyklopädie der Technischen Chemie, Bd. 19 (1980), S. 280 - 300 beschrieben sind. Der Gelanteil der Pfropfgrundlage E.2 beträgt mindestens 30 Gew.-%, vorzugsweise mindestens 40 Gew.-% (in Toluol gemessen).

Die Pfropfcopolymerisate der Komponente E) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten der Komponente E) auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß E.2 der als Komponente E) einzusetzenden Polymerisate sind vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, insbesondere Methyl-, Ethyl-, Butyl-, n-Octyl- und 2-Ethylhexylester; Halogenalkylester, vorzugsweise Halogen-$C_1$-$C_8$-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2. Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind vorzugsweise Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657**,** DE-A 3 704 655**,** DE-A 3 631 540 und DE-A 3 631 539 beschrieben werden.

Der Gelgehalt der Pfropfgrundlage E.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977**).**

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796**)** bestimmt werden.

**Komponente F)**

In bevorzugter Ausführungsform enthalten erfindungsgemäße Zusammensetzungen als zusätzliche Komponente F) wenigstens ein von den Komponenten B), C), D) und E) verschiedenes **Additiv.** Ebenfalls in den erfindungsgemäßen Verfahren und Verwendungen kann in bevorzugter Ausführungsform als Komponente F) wenigstens ein von den Komponenten A), B), C), D) und E) verschiedenes **Additiv** eingesetzt werden.

Vorzugsweise handelt es sich bei Komponente D) um von Komponente B) verschiedene UV-Stabilisatoren, Antistatika, Fließhilfsmittel, Entformungsmittel, Emulgatoren, Nukleierungsmittel, Weichmacher, Gleitmittel, Farbstoffe und Pigmente.

Die genannten und weitere geeignete Additive sind zum Beispiel beschrieben in Gächter, Müller, Kunststoff-Additive, 3. Ausgabe, Hanser-Verlag, München, Wien, 1989**.** Die Additive können alleine oder in Mischung bzw. in Form von Masterbatchen eingesetzt werden.

Als Pigmente können Titandioxid, Ultramarinblau, Eisenoxid, Ruß, Phthalocyanine, Chinacridone, Perylene, Nigrosin und Anthrachinone eingesetzt werden.

Als Nukleierungsmittel können Natriumphenylphosphinat, Aluminiumoxid, Siliziumdioxid sowie bevorzugt Talkum eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können Phthalsäuredioctylester, Phthalsäuredibenzylester, Phthalsäurebutylbenzylester, Kohlenwasserstofföle, N-(n-Butyl)benzolsulfonamid eingesetzt werden.

Die Zubereitung erfindungsgemäßer Zusammensetzungen für die Herstellung von Formmassen für den weiteren Einsatz im Spritzguss oder in der Extrusion erfolgt durch Mischen der einzelnen Komponenten A) und B) sowie gegebenenfalls noch C), D), E) und/oder F) in wenigstens einem Mischaggregat, vorzugsweise einem Compounder. Zur Herstellung eines auf diesen Zusammensetzungen basierenden Erzeugnisses werden die Formmassen einer Weiterverarbeitung unterzogen, vorzugsweise einem Spritzgussverfahren oder einer Extrusion oder dem Blasformen. Die Verfahren des Spritzgusses sowie der Extrusion thermoplastischer Formmassen sind dem Fachmann bekannt.

Die Komponente B) kann bei dem Schritt, wo sie mit Komponente A) sowie gegebenenfalls noch mit C), D), E) und/oder F) vermischt wird, als Reinsubstanz eingesetzt werden. Die Komponente B) kann bei diesem Verarbeitungsschritt des Mischens aber auch als Konzentrat oder Masterbatch nach Vormischung mit einem Konzentrat- oder Masterbatchträger eingesetzt werden. Masterbatche können z.B. Mischungen aus Polyestern und Komponente B) sein, die hohe Gehalte der Komponente B) enthalten (bis zu 70 Gewichtsprozent in Bezug auf 100 Gewichtsprozent für das Masterbatch), die durch Compoundierung erhalten werden. Konzentrate können z.B. Mischungen aus porösen Polycarbonaten-Granulaten und Komponente B) sein, die hohe Gehalte der Komponente B) enthalten (bis zu 70 Gewichtsprozent in Bezug auf 100 Gewichtsprozent für das Konzentrat), die durch physikalisches Mischen (Auftrudeln) erhalten werden.

Erfindungsgemäße Verfahren zur Herstellung von Erzeugnissen unter Einsatz der erfindungsgemäßen Komponente B) mittels Extrusion oder Spritzguss werden bei Schmelzetemperaturen im Bereich von 100 bis 330°C, bevorzugt im Bereich von 225 bis 300°C sowie gegebenenfalls zusätzlich bei Drücken von maximal 2500 bar, bevorzugt bei Drücken

von maximal 2000 bar, besonders bevorzugt bei Drücken von maximal 1500 bar und ganz besonders bevorzugt bei Drücken von maximal 750 bar, durchgeführt.

Eine Extrusion unterscheidet man vorzugsweise in Profilextrusion und sequentielle Coextrusion. Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen **(**Thielen, Hartwig, Gust, "Blasformen von Kunststoffhohlkörpern", Carl Hanser Verlag, München 2006, Seite 127-129**)**.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Als Rohstoff werden erfindungsgemäße Zusammensetzungen eingesetzt, die vorzugsweise durch Compoundieren bereits zu einer Formmasse und diese wiederum vorzugsweise zu einem Granulat verarbeitet wurde. Nach dem Abkühlen (Erstarren) der in den temperierten Hohlraum eingespritzten Formmasse wird das Spritzgussteil entformt. Man unterscheidet die Verfahrensschritte a) Plastifizieren / Aufschmelzen, b) Einspritzphase (Füllvorgang), c) Nachdruckphase (wegen thermischer Kontraktion bei der Kristallisation) und d) Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man die Funktionskomplexe a) Angusssystem, b) Formbildende Einsätze, c) Entlüftung, d) Maschinen- und Kraftaufnahme, e) Entformungssystem und Bewegungsübertragung sowie f) Temperierung.

Im Gegensatz zum Spritzguss wird bei der Extrusion ein endlos geformter Kunststoffstrang, hier aus einer erfindungsgemäßen Formmasse, im Extruder eingesetzt, wobei der Extruder eine Maschine zur Herstellung thermoplastischer Formstücke/Erzeugnisse ist. Man unterscheidet dabei Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

**Bevorzugte Zusammensetzungen**

Vorzugsweise enthalten erfindungsgemäße Erzeugnisse, Formmassen oder Zusammensetzungen bezogen auf 100 Massenanteile des als Komponente A) einzusetzenden Polybutylenterephthalats und/oder Polycarbonats 0,01 bis 5,26 Massenanteile, bevorzugt 0,02 bis 3 Massenanteile des als Komponente B) einzusetzenden Phosphorigsäureesters der allgemeinen Formel (I)

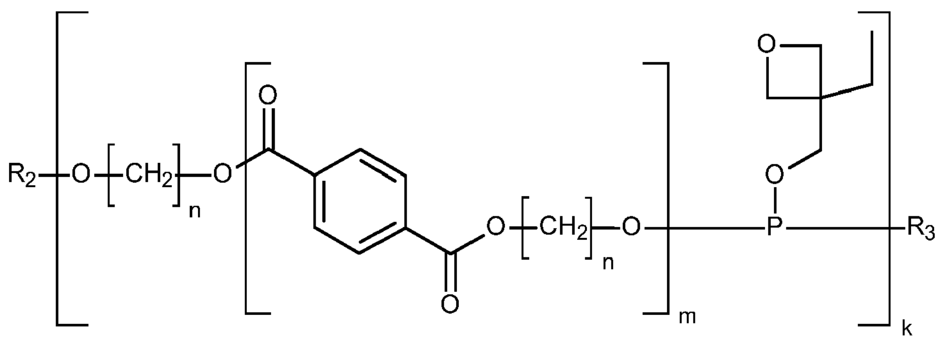

(I)

worin n für natürliche Zahlen von 2 bis 12 steht,

m für 0 oder für eine Zahl größer 0 bis 30 steht,

k für eine Zahl im Bereich von 1 bis 200 steht,

$R_2$ für einen kovalent gebundenen Rest

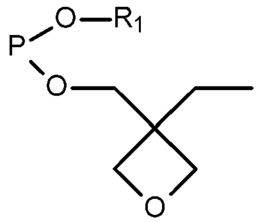
,
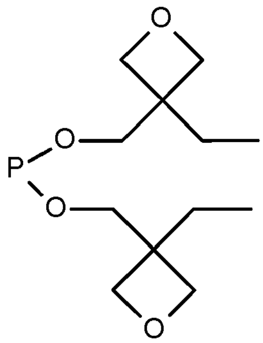
,
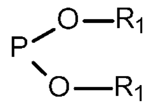

oder Wasserstoff steht, und

$R_3$ für einen kovalent gebundenen Rest O-H, O-$R_1$,

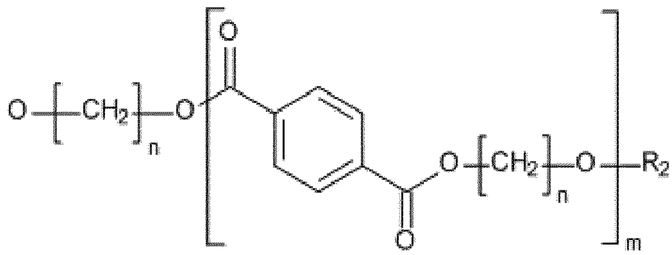

oder

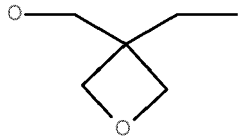

steht, worin

n, m, $R_2$ die oben genannten Bedeutungen haben und

$R_1$ für geradkettiges und/oder verzweigtes und/oder substituiertes $C_1$-$C_{10}$-Alkyl, Aryl-$C_1$-$C_{10}$-Alkyl und/oder für Aryl steht.

Besonders bevorzugt enthalten erfindungsgemäße Erzeugnisse, Formmassen oder Zusammensetzungen bezogen auf 100 Massenanteile des als Komponente A) einzusetzenden Polybutylenterephthalats und/oder Polycarbonats 0,01 bis 5,26 Massenanteile, bevorzugt 0,02 bis 3 Massenanteile des als Komponente B) einzusetzenden **Kondensationsprodukts von Triphenylphosphit, Ethyl-3-hydroxymethyloxetan und Bis(2-hydroxyethyl)terephthalat,** oder des **Kondensationsprodukts von Triphenylphosphit, Ethyl-3-hydroxymethyloxetan und Bis(3-hydroxpropyl)terephthalat** oder des **Kondensationsprodukts von Triphenylphosphit, Ethyl-3-hydroxymethyloxetan und Bis(4-hydroxybutyl)terephthalat.**

Besonders bevorzugt enthalten erfindungsgemäße Erzeugnisse, Formmassen oder Zusammensetzungen bezogen auf 100 Massenanteile des als Komponente A) einzusetzenden Polybutylenterephthalats und/oder Polycarbonats 0,01 bis 5,26 Massenanteile, bevorzugt 0,02 bis 3 Massenanteile des als Komponente B) einzusetzenden **Kondensationsprodukts von Triphenylphosphit, Ethyl-3-hydroxymethyloxetan und 1,4-Butandiol.**

## Bevorzugte Verwendungen

Die Erfindung betrifft bevorzugt die Verwendung von 0,01 bis 5,26 Massenanteilen, bevorzugt 0,02 bis 3 Massenanteilen wenigstens eines Phosphorigsäureesters der allgemeinen Formel (I)

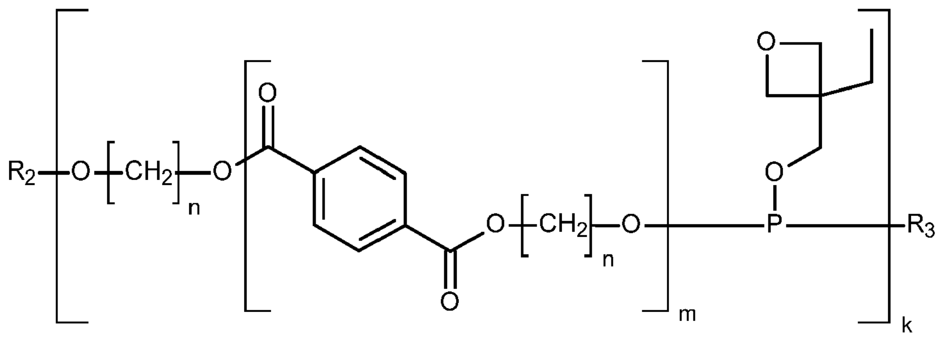

(I)

worin n für natürliche Zahlen von 2 bis 12 steht,

m für 0 oder für eine Zahl größer 0 bis 30 steht,

k für eine Zahl im Bereich von 1 bis 200 steht,

$R_2$ für einen kovalent gebundenen Rest

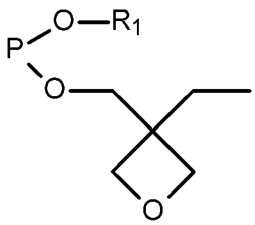

,

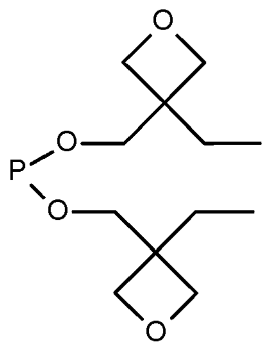

,

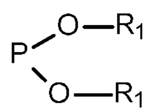

oder Wasserstoff steht, und

$R_3$ für einen kovalent gebundenen Rest O-H, O-$R_1$,

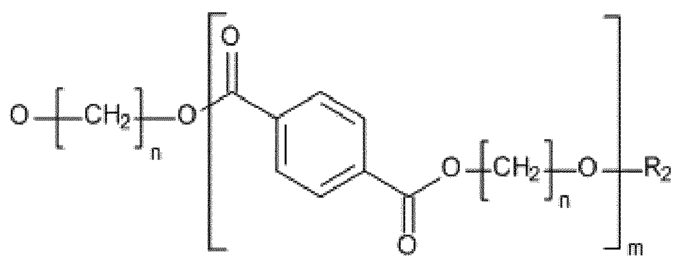

oder

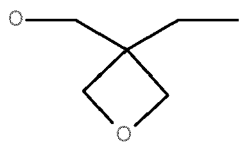

steht, worin

n, m, $R_2$ die oben genannten Bedeutungen haben und

$R_1$ für geradkettiges und/oder verzweigtes und/oder substituiertes $C_1$-$C_{10}$-Alkyl, Aryl-$C_1$-$C_{10}$-Alkyl und/oder für Aryl steht,

als Stabilisator von 100 Massenanteilen als Komponente A) einzusetzendem Polybutylenterephthalat und/oder Polycarbonat.

Die Erfindung betrifft bevorzugt die **Verwendung** von 0,01 bis 5,26 Massenanteilen, bevorzugt 0,02 bis 3 Massenanteilen des als Komponente B) einzusetzenden Kondensationsprodukts von

Triphenylphosphit, Ethyl-3-hydroxymethyloxetan und Bis(2-hydroxyethyl)terephthalat, oder des Kondensationsprodukts von Triphenylphosphit, Ethyl-3-hydroxymethyloxetan und Bis(3-hydroxpropyl)terephthalat, oder des Kondensationsprodukts von Triphenylphosphit, Ethyl-3-hydroxymethyloxetan und Bis(4-hydroxybutyl)terephthalat,

als Stabilisator von 100 Massenanteilen als Komponente A) einzusetzendem Polybutylenterephthalat und/oder Polycarbonat.

Die Erfindung betrifft bevorzugt die **Verwendung** von 0,01 bis 5,26 Massenanteilen, bevorzugt 0,02 bis 3 Massenanteilen des als Komponente B) einzusetzenden Kondensationsprodukts von Triphenylphosphit, Ethyl-3-hydroxymethyloxetan und 1,4-Butandiol als Stabilisator von 100 Massenanteilen als Komponente A) einzusetzendem Polybutylenterephthalat und/oder Polycarbonat.

**Bevorzugte Verfahren**

Die Erfindung betrifft bevorzugt ein **Verfahren** zur Stabilisierung von als Komponente A) einzusetzendem Polybutylenterephthalat und/oder Polycarbonat, indem man 0,01 bis 5,26 Massenanteile, bevorzugt 0,02 bis 3 Massenanteile des als Komponente B) einzusetzenden wenigstens einen Phosphorigsäureester der allgemeinen Formel (I)

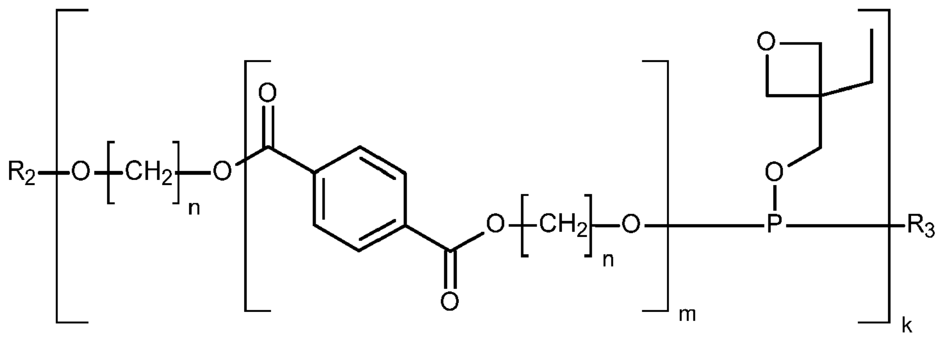

(I)

worin n für natürliche Zahlen von 2 bis 12 steht,

m für 0 oder für eine Zahl größer 0 bis 30 steht,

k für eine Zahl im Bereich von 1 bis 200 steht,

$R_2$ für einen kovalent gebundenen Rest

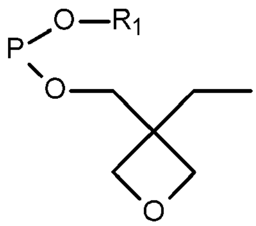 , 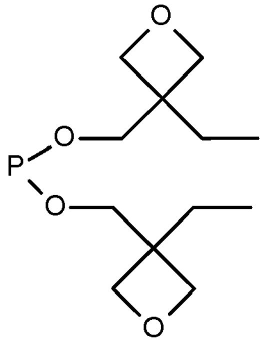 ,

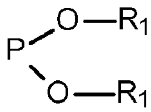

oder Wasserstoff steht, und

$R_3$ für einen kovalent gebundenen Rest O-H, O-$R_1$,

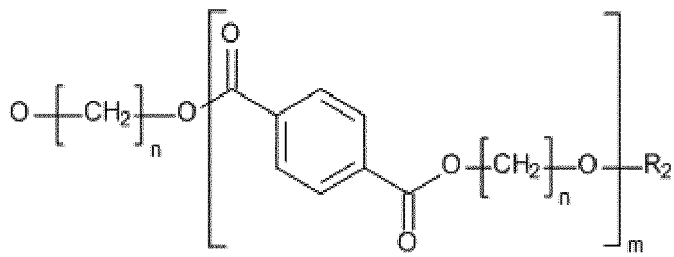

oder

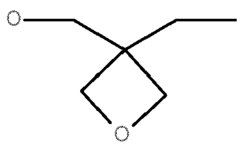

steht, worin

n, m, $R_2$ die oben genannten Bedeutungen haben und

$R_1$ für geradkettiges und/oder verzweigtes und/oder substituiertes $C_1$-$C_{10}$-Alkyl, Aryl-$C_1$-$C_{10}$-Alkyl und/oder für Aryl steht,

mit 100 Massenanteilen der Komponente A) und gegebenenfalls weiteren Komponenten in wenigstens einem Mischwerkzeug mischt und die dabei entstehende Formmasse im Spritzguss, durch Extrusion oder Blasformen zu Erzeugnissen, vorzugsweise zu Erzeugnissen der Elektronikindustrie, der Elektroindustrie, in Haushaltswaren, in der Kfz-Industrie, in der Medizintechnik, in der Telekommunikationsindustrie oder in der Elektromobilität verarbeitet.

Die Erfindung betrifft besonders bevorzugt ein **Verfahren** zur Stabilisierung von als Komponente A) einzusetzendem Polybutylenterephthalat und/oder Polycarbonat, indem man 0,01 bis 5,26 Massenanteile, bevorzugt 0,02 bis 3

Massenanteile des als Komponente B) einzusetzenden

Kondensationsprodukts von Triphenylphosphit, Ethyl-3-hydroxymethyloxetan und Bis(2-hydroxyethyl)terephthalat, oder des

Kondensationsprodukts Triphenylphosphit, Ethyl-3-hydroxymethyloxetan und Bis(3-hydroxpropyl)terephthalat, oder des

Kondensationsprodukts von Triphenylphosphit, Ethyl-3-hydroxymethyloxetan und Bis(4-hydroxybutyl)terephthalat,

mit 100 Massenanteilen der Komponente A) und gegebenenfalls weiteren Komponenten in wenigstens einem Mischwerkzeug mischt und die dabei entstehende Formmasse im Spritzguss, durch Extrusion oder Blasformen zu Erzeugnissen, vorzugsweise zu Erzeugnissen der Elektronikindustrie, der Elektroindustrie, in Haushaltswaren, in der Kfz-Industrie, in der Medizintechnik, in der Telekommunikationsindustrie oder in der Elektromobilität verarbeitet.

Die Erfindung betrifft besonders bevorzugt ein **Verfahren** zur Stabilisierung von als Komponente A) einzusetzendem Polybutylenterephthalat und/oder Polycarbonat, indem man 0,01 bis 5,26 Massenanteile, bevorzugt 0,02 bis 3 Massenanteile des als Komponente B) einzusetzenden Kondensationsprodukts von Triphenylphosphit, Ethyl-3-hydroxymethyloxetan und 1,4-Butandiol mit 100 Massenanteilen der Komponente A) und gegebenenfalls weiteren Komponenten in wenigstens einem Mischwerkzeug mischt und die dabei entstehende Formmasse im Spritzguss, durch Extrusion oder Blasformen zu Erzeugnissen, vorzugsweise zu Erzeugnissen der Elektronikindustrie, der Elektroindustrie, in Haushaltswaren, in der Kfz-Industrie, in der Medizintechnik, in der Telekommunikationsindustrie oder in der Elektromobilität verarbeitet.

**Beispiele:**

**Kerbschlagzähigkeit**

Die Messung der Kerbschlagzähigkeit nach Izod nach dem 3-Punkt-Biegeversuch gemäß **DIN EN ISO 180/1A** bei Raumtemperatur (+23°C +/- 2°C) erfolgte an Prüfkörpern der Abmessungen 80mm x 10mm x 4mm, die bei einer Massetemperatur von 280 °C, einer Werkzeugtemperatur von 80 °C und einer Kühlzeit von 120 s durch Spritzguss hergestellt wurden.

**Wärmeformbeständigkeit**

Die Messung der Wärmeformbeständigkeit nach Vicat gemäß **DIN EN ISO 306** nach Methode Vicat B mit einer Prüflast von 50 N und der Heizrate von 120°C/h erfolgte an Prüfkörpern der Abmessungen 80mm x 10mm x 4mm, die bei einer Massetemperatur von 250 °C und einer Werkzeugtemperatur von 70 °C durch Spritzguss hergestellt wurden.

**Schmelzestabilität bestimmt über den Schmelzindex MVR (Schmelze-Volumenfließrate)**

MVR-Messungen wurden nach **ISO 1133** an einem Fließprüfgerät B4106.200 der Fa. Zwick/Roell nach 5 und 20 Minuten Verweilzeit bei 270 °C durchgeführt.

Bei Polyestern führt Temperatureinwirkung mit der Zeit zu einem leichten Kettenabbau, welcher mit einer Erhöhung des MVR Wertes einhergeht. Der prozentuale Anstieg des MVR Wertes nach 20 minütiger Verweilzeit $MVR_{20min}$ im Vergleich zu 5 minütiger Verweilzeit $MVR_{5min}$ im Fließprüfgerät wurde als Maß für die Stabilität in der Schmelze herangezogen und nach der Gleichung

$$Anstieg\ MVR = 100\% \cdot \frac{MVR_{20min} - MVR_{5min}}{MVR_{5min}}$$

berechnet. Je geringer der Anstieg des MVR Wertes ist, desto höher ist die Schmelzestabilität der Zusammensetzung.

**Umesterungsstabilität bestimmt über Differential Scanning Calorimetry (DSC)**

Die thermische Stabilität von Komponente A) wurde am Granulat mit Hilfe der DSC-Methode (Dynamische Differenzkalorimetrie) an einem Gerät des Typs Mettler DSC 822e der Fa. Mettler Toledo, Greifensee, Schweiz bestimmt. Dazu wurden 10 - 15 mg der jeweiligen, zu einem Compound verarbeiteten Zusammensetzung eingewogen, dann unter Stickstoff (70 ml/min) mit +20K/min von 0°C auf 300°C erhitzt ("1. Aufheizung"), anschließend mit -10K/min wieder von

300°C auf 0°C abgekühlt und für 2 min bei 0°C gehalten. Der Vorgang wurde noch zweimal wiederholt. Die Probe wurde dabei über einen längeren Zeitraum hohen Temperaturen ausgesetzt, die zu Umesterungen führte. Die Verschiebung der Schmelzpeaks zwischen 1. Aufheizung und 3. Aufheizung hin zu kleineren Temperaturen wurde dabei als Maß für die thermische Stabilität einer Probe betrachtet. Je geringer die Differenz zwischen den Schmelzpeaks war, desto höher war die thermische Stabilität. Im Falle von Polybutylenterephthalat wurde häufig ein Schmelzpeak mit Schulter in der DSC beobachtet. Für die Berechnung der Schmelzpeakverschiebung wurde das Maximum des Hauptschmelzpeaks herangezogen.

**Farbstabilität bestimmt über Verfärbung nach Heißluftalterung**

Zur Überprüfung der Farbstabilität nach Heißluftlagerung wurde Granulat für 96 h bei 130 °C in einem Trockenschrank des Typs FP115 der Fa. Binder GmbH, Tuttlingen, Deutschland gelagert.

**Edukte:**

**Komponente A1):** Lineares Polybutylenterephthalat (Pocan® B1600, Handelsprodukt der Lanxess Deutschland GmbH, Deutschland).

**Komponente A2):** Polycarbonat (Makrolon® 2405, Covestro AG).

**Komponente B1): Phosphorigsäureester auf Basis von Bis(2-hydroxyethyl)terephthalat**

Unter Stickstoffatmosphäre wurden 400 g Triphenylphosphit, 329 g Ethyl-3-hydroxymethyloxetan, 220 g Bis(2-hydroxyethyl)terephthalat [CAS Nr. 959-26-2) und 2,5 g Natriumphenolat bei 40 °C vorgelegt. Anschließend wurde auf 100 mbar evakuiert. Innerhalb von einer Stunde wurde die Reaktionsmischung auf 120 °C aufgeheizt und eine Stunde nachgerührt. Anschließend wurde bei 10 mbar 45 Minuten unter Rückfluss erhitzt und danach bis zu einer maximalen Sumpftemperatur von 170 °C bei 1 mbar destilliert. Nach Zugabe von 1,5 g 75%iger Phosphorsäure wurde bis 190 °C geheizt. Nach Abkühlen stellte der Sumpf eine bei Raumtemperatur hochviskose farblose Masse dar und wurde als Komponente B1) eingesetzt. Das Produkt hatte in der GPC (Gelpermeationschromatographie) ein Gewichtsmittel Mw=1749 g/mol und ein Zahlenmittel Mn=764 g/Mol. Zur Charakterisierung von Komponente B1) mittels GPC wurde Tetrahydrofuran (THF) als Eluent verwendet. Die Durchführung der GPC-Messung erfolgte nach Kalibrierung mit einem Polystyrol-Standard und unter Verwendung eines Brechungsindex (RI)-Detektors.

**Komponente B2): Phosphorigsäureester auf Basis von 1,4-Butandiol**

Unter Stickstoffatmosphäre wurden 400 g Triphenylphosphit, 329 g Ethyl-3-hydroxymethyloxetan, 78 g 1,4-Butandiol und 2,5 g Natriumphenolat bei 40 °C vorgelegt. Anschließend wurde auf 100 mbar evakuiert. Innerhalb von einer Stunde wurde die Reaktionsmischung auf 120 °C aufgeheizt und eine Stunde nachgerührt. Anschließend wurde bei 10 mbar 45 Minuten unter Rückfluss erhitzt und danach bis zu einer maximalen Sumpftemperatur von 170 °C bei 1 mbar destilliert. Nach Zugabe von 1,5 g 75%iger Phosphorsäure wurde bis 190 °C geheizt. Nach Abkühlen stellte der Sumpf eine bei Raumtemperatur hochviskose farblose Masse dar und wurde als Komponente B2) eingesetzt. Das Produkt hatte in der GPC ein Gewichtsmittel Mw=359 g/mol und ein Zahlenmittel Mn=309 g/Mol. Zur Charakterisierung von Komponente B2 mittels GPC wurde Tetrahydrofuran (THF) als Eluent verwendet. Die Durchführung der GPC-Messung erfolgte nach Kalibrierung mit einem Polystyrol-Standard und unter Verwendung eines Brechungsindex (RI)-Detektors.

**Komponente E)** Acrylnitril-Butadien-Styrol-Copolymer (Novodur® P60, Styrolution GmbH)

**Komponente F)** Pentaerythritstearat (Loxiol® P861/3.5, Emery Oleochemicals GmbH)

**Vergleich: Additiv DP0001** [CAS Nr. 649560-74-7], gemäß Produktdatenblatt vom 22.1.2018 bezeichnet als Phosphorous acid, triphenyl ester, polymer with 4,4'-(1-methylethylidene)bis[phenol], (3-ethyl-3-oxetanyl)methyl ester, Lanxess Deutschland GmbH. Bezüglich der Herstellung von Additiv DP0001 siehe DE 10231334 A1**.**

Zur Herstellung der erfindungemäß beschriebenen Zusammensetzungen wurden die Komponenten A), B) bzw. Additiv DP0001, E) und F) in einem Zweiwellenextruder (ZSK 26 Mega Compounder der Fa. Coperion Werner & Pfleiderer Stuttgart, Deutschland mit 3-Loch Düsenplatte und einem Düsenlochdurchmesser von 3mm) bei Temperaturen im

Bereich von 260 bis 295°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 2h getrocknet.

Die Platten und Prüfkörper für die in der **Tab. 1** aufgeführten Untersuchungen wurden auf einer handelsüblichen Spritzgießmaschine bei einer Massetemperatur im Bereich von 250 bis 280°C und einer Werkzeugtemperatur im Bereich von 70 bis 80°C verspritzt.

**Tab. 1**

| | Einheit | Bsp. 1 | Bsp. 2 | Vergl. 1 | Bsp. 3 | Bsp. 4 | Vergl. 2 | Bsp. 5 | Vergl. 3 | Bsp. 6 | Vergl. 4 |
|---|---|---|---|---|---|---|---|---|---|---|---|
| **Komponente A2)** | Massenanteil | 44,15 | 44,15 | 44,15 | 44,09 | 44,09 | 44,09 | 44,20 | 44,20 | | |
| **Komponente A1)** | Massenanteil | 55,85 | 55,85 | 55,85 | 55,91 | 55,91 | 55,91 | 55,80 | 55,80 | 100 | 100 |
| **Komponente B1)** | Massenanteil | 0,2 | | | 0,3 | | | | | | |
| **Komponente B2)** | Massenanteil | | 0,2 | | | 0,3 | | 0,1 | | 2,0 | |
| **Vergl. Additiv DP0001** | Massenanteil | | | 0,2 | | | 0,3 | | 0,1 | | 2,0 |
| **Komponente E)** | Massenanteil | 11,17 | 11,17 | 11,17 | 11,18 | 11,18 | 11,18 | 11,16 | 11,16 | | |
| **Komponente F)** | Massenanteil | 0,34 | 0,34 | 0,34 | 0,34 | 0,34 | 0,34 | 0,33 | 0,33 | | |
| **Frei von Bisphenol A** | | Ja | Ja | Nein | Ja | Ja | Nein | Ja | Nein | Ja | Nein |
| **Vicat B** | [ºC] | 126 | 126 | 125 | | | | | | | |
| **Kerbschlagzähigkeit** | [kJ/m2] | 59 | 59 | 58 | | | | | | | |
| **Anstieg MVR** | [%] | | | | 29 | 23 | 31 | | | | |
| **DSC Schmelzpunktdiffere nz 1. - 3. Aufheizen** | [ºC] | | | | | | | -2,36 | -4,23 | | |
| **Farbstabilität nach Heißluftalterung** | Visueller Eindruck | | | | | | | | | Keine Vergilbung | Deutlich sichtbare Vergilbung |

Wie aus **Tab. 1** ersichtlich, wiesen Erzeugnisse auf Basis der erfindungsgemäßen Zusammensetzungen unter Einsatz von Komponente B1) oder B2) im Vergleich zum Handelsprodukt Additiv DP0001 bei gleichem Füllgrad keine Einbußen bei der Kerbschlagzähigkeit und der Wärmeformbeständigkeit auf.

Überraschenderweise wurde anhand von Beispiel 3, Beispiel 4 und Vergleichsbeispiel 2 gefunden, dass Erzeugnisse auf Basis der erfindungsgemäßen Zusammensetzungen unter Einsatz von Komponente B1) oder B2) im Vergleich zum Handelsprodukt Additiv DP0001 einen geringeren Anstieg im Schmelzindex (MVR) aufwiesen. Damit zeigten erfindungsgemäße PC/PBT Formmassen eine höhere Schmelzestabilität als das Vergleichsbeispiel.

Zudem wurde überraschenderweise mit Beispiel 5 und Vergleichbeispiel 3 für eine erfindungsgemäße Zusammensetzung unter Einsatz von Komponente B2) im Vergleich zum Handelsprodukt Additiv DP0001 im DSC nach dreimaligem Aufheizen eine deutlich geringere Verschiebung der Schmelztemperatur von Polybutylenterephthalat zu geringeren Temperaturen festgestellt. Damit wiesen erfindungsgemäße PC/PBT Formmassen ein geringeres Maß an Umesterung zwischen PC und PBT und damit eine bessere Stabilität gegen Umesterung auf, als das Vergleichsbeispiel.

Zusätzlich wurde anhand von Beispiel 6 und Vergleichsbeispiel 4 überraschend gefunden, dass Erzeugnisse auf Basis einer erfindungsgemäßen Zusammensetzung unter Einsatz von Komponente B2) im Vergleich zum Handelsprodukt Additiv DP0001 nach Heißluftlagerung keine Vergilbung zeigten. Damit wiesen erfindungsgemäße Formmassen eine deutlich höhere Farbstabilität unter Heißlufteinfluss auf, als das Vergleichsbeispiel.

## Patentansprüche

1. Phosphorigsäureester der allgemeinen Formel (I)

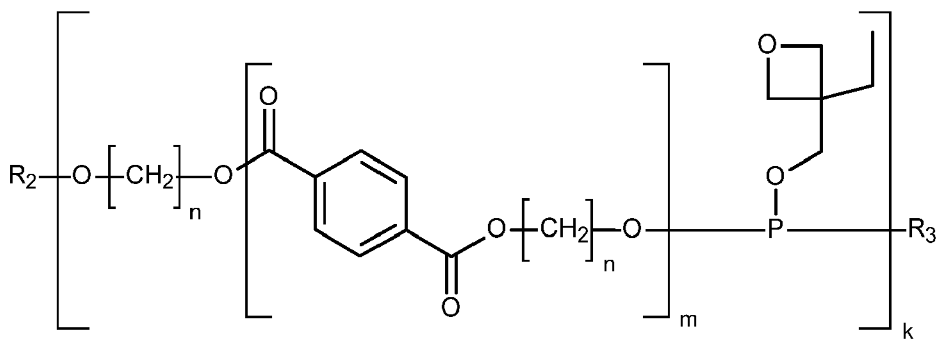

(I)

worin n für natürliche Zahlen von 2 bis 12 steht,
m für 0 oder für eine Zahl größer 0 bis 30 steht und
k für eine Zahl im Bereich von 1 bis 200 steht,
$R_2$ für einen kovalent gebundenen Rest,

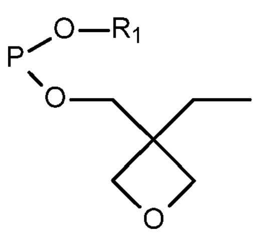
,
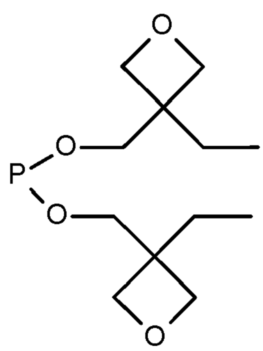
,
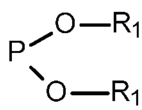

oder Wasserstoff steht, $R_3$ für einen kovalent gebundenen Rest O-H, O-$R_1$,

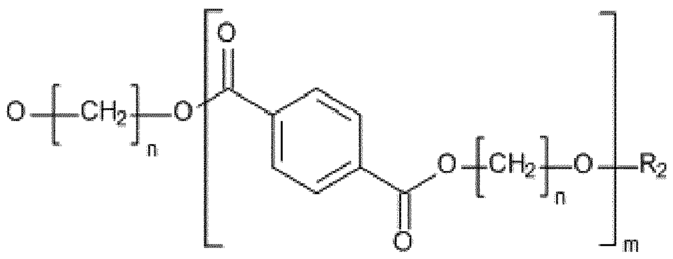

oder

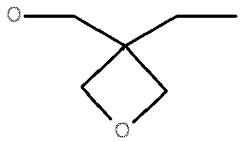

steht, worin
n, m, $R_2$ die oben genannten Bedeutungen haben und
$R_1$ für geradkettiges und/oder verzweigtes und/oder substituiertes $C_1$-$C_{10}$-Alkyl, Aryl-$C_1$-$C_{10}$-Alkyl und/oder für Aryl steht.

2. Polymere, vorzugsweise Thermoplasten, enthaltend wenigstens einen Phosphorigsäureester der allgemeinen Formel (I) gemäß Anspruch 1.

3. Thermoplasten gemäß Anspruch 2, **dadurch gekennzeichnet, dass** es sich um Polyethylen, Polypropylen, Polycarbonat, Polyester, insbesondere Polyalkylenterephthalat, Polyoxymethylen, Polyketone sowie deren Mischungen, insbesondere Polyalkylenterephthalat, Polycarbonat oder Polyalkylenterephthalat-Polycarbonat-Blends, handelt.

4. Erzeugnisse, insbesondere Erzeugnisse der Elektronikindustrie, Elektroindustrie, Haushaltswaren, Kfz-Industrie, Medizintechnik und Telekommunikationsindustrie, Formmassen oder Zusammensetzungen **dadurch gekennzeichnet, dass** diese wenigstens einen stabilisierten Thermoplasten gemäß Anspruch 3 enthalten.

5. Erzeugnisse, Formmassen oder Zusammensetzungen gemäß Anspruch 4, **dadurch gekennzeichnet, dass** auf 100 Massenanteile des als Komponente A) zu stabilisierenden Thermoplasten 0,01 bis 5,26 Massenanteile, bevorzugt 0,02 bis 3 Massenanteile des als Komponente B) einzusetzenden Phosphorigsäureesters der allgemeinen Formel (I) eingesetzt werden.

6. Erzeugnisse, Formmassen oder Zusammensetzungen gemäß Anspruch 4, **dadurch gekennzeichnet, dass** als Komponente B) das Kondensationsprodukt von Triphenylphosphit, Ethyl-3-hydroxymethyloxetan und Bis(2-hydroxyethyl)terephthalat eingesetzt wird.

7. Erzeugnisse, Formmassen oder Zusammensetzungen gemäß Anspruch 4, **dadurch gekennzeichnet, dass** als Komponente B) das Kondensationsprodukt von Triphenylphosphit, Ethyl-3-hydroxymethyloxetan und 1,4-Butandiol oder das Kondensationsprodukt von Triphenylphosphit, Ethyl-3-hydroxymethyloxetan und Bis(3-hydroxpropyl)terephthalat, oder das Kondensationsprodukt von Triphenylphosphit, Ethyl-3-hydroxymethyloxetan und Bis(4-hydroxybutyl)terephthalat eingesetzt wird.

8. Erzeugnisse, Formmassen oder Zusammensetzungen gemäß einem oder mehreren der Ansprüche 5 bis 7, **dadurch gekennzeichnet, dass** zusätzlich zur Komponente A) und zur Komponente B) noch C) wenigstens 0,01 bis 280 Massenanteile, bevorzugt 0,01 bis 120 Massenanteile wenigstens eines Füllstoffs oder Verstärkungsstoffs bezogen auf 100 Massenanteile der Komponente(n) A) eingesetzt werden.

9. Erzeugnisse, Formmassen oder Zusammensetzungen gemäß Anspruch 8, **dadurch gekennzeichnet, dass** als Füllstoff oder Verstärkungsstoff Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln Kohlenstofffasern oder Glasfasern eingesetzt wird, insbesondere Glasfasern.

**10.** Erzeugnisse, Formmassen oder Zusammensetzungen gemäß einem oder mehreren der Ansprüche 8 oder 9, **dadurch gekennzeichnet, dass** zusätzlich zu den Komponenten A), B) und C) oder anstelle von Komponente C) noch D) 0,01 bis 46 Massenanteile, bevorzugt 0,01 bis 30 Massenanteile wenigstens eines Flammschutzmittels bezogen auf 100 Massenanteile der Komponente(n) A) eingesetzt werden.

**11.** Erzeugnisse, Formmassen oder Zusammensetzungen gemäß Anspruch 10, **dadurch gekennzeichnet, dass** zusätzlich zu den Komponenten A), B), C) und D) oder anstelle der Komponenten C) und/oder D) noch E) 0,01 bis 100 Massenanteile, bevorzugt 0,01 bis 50 Massenanteile wenigstens eines Elastomermodifikators bezogen auf 100 Massenanteile der Komponente(n) A) eingesetzt werden, vorzugsweise AcrylnitrilButadien-Styrol-Copolymer.

**12.** Erzeugnisse, Formmassen oder Zusammensetzungen gemäß Anspruch 11, **dadurch gekennzeichnet, dass** zusätzlich zu den Komponenten A), B), C), D) und E) oder anstelle der Komponenten C) und/oder D) und/oder E) noch F) 0,01 bis 15 Massenanteile, bevorzugt 0,01 bis 10 Massenanteile wenigstens eines von den Komponenten B), C), D) und E) verschiedenen Additivs, bezogen auf 100 Massenanteile der Komponente(n) A) eingesetzt werden, insbesondere Pentaerythritstearat.

**13.** Verwendung wenigstens eines Phosphorigsäureesters der allgemeinen Formel (I)

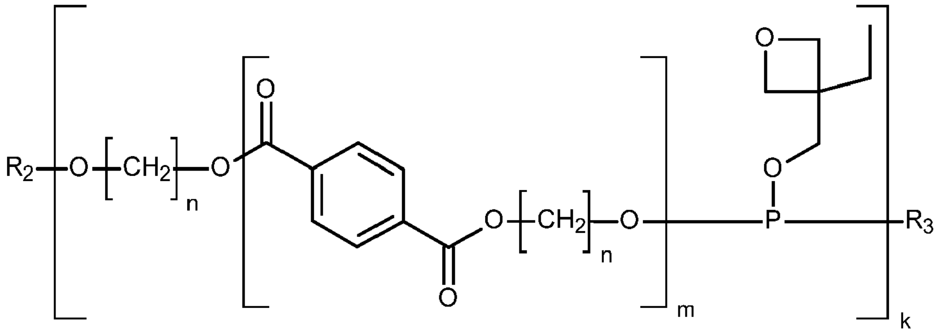

(I)

worin n für natürliche Zahlen von 2 bis 12 steht,
m für 0 oder für eine Zahl größer 0 bis 30 steht,
k für eine Zahl im Bereich von 1 bis 200 steht,
$R_2$ für einen kovalent gebundenen Rest

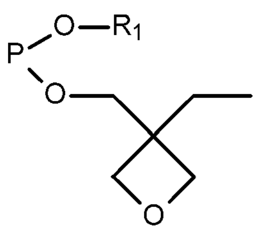 , 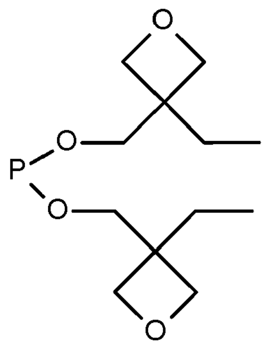 , 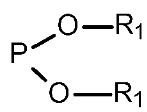

oder Wasserstoff steht, und
$R_3$ für einen kovalent gebundenen Rest O-H, O-$R_1$,

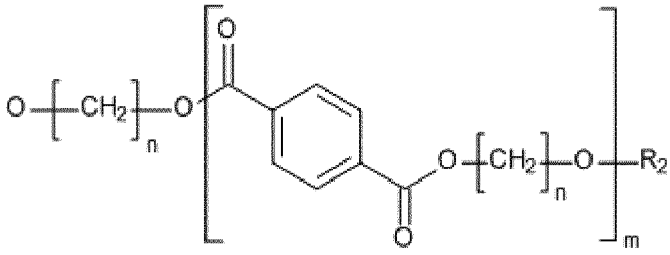

oder

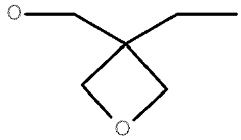

steht,
worin
n, m, $R_2$ die oben genannten Bedeutungen haben und
$R_1$ für geradkettiges und/oder verzweigtes und/oder substituiertes $C_1$-$C_{10}$-Alkyl, Aryl-$C_1$-$C_{10}$-Alkyl und/oder für Aryl steht,
als Stabilisatoren von Polymeren, vorzugsweise von Thermoplasten, besonders bevorzugt als Stabilisatoren von Polyestern und ganz besonders bevorzugt von Polyalkylenterephthalaten, von Polycarbonaten oder von Polyalkylenterephthalat-Polycarbonat-Blends.

**14.** Verwendung gemäß Anspruch 13, **dadurch gekennzeichnet, dass** als Komponente B) das Kondensationsprodukt von Triphenylphosphit, Ethyl-3-hydroxymethyloxetan und Bis(2-hydroxyethyl)terephthalat oder das Kondensationsprodukt von Triphenylphosphit, Ethyl-3-hydroxymethyloxetan und 1,4-Butandiol eingesetzt wird.

**15.** Verfahren zur Stabilisierung von Polymeren, vorzugsweise von Thermoplasten, besonders bevorzugt von Polyestern und ganz besonders bevorzugt von Polyalkylenterephthalaten, von Polycarbonaten oder von Polyalkylenterephthalat-Polycarbonat-Blends, **dadurch gekennzeichnet, dass** man wenigstens einen Phosphorigsäureester der allgemeinen Formel (I)

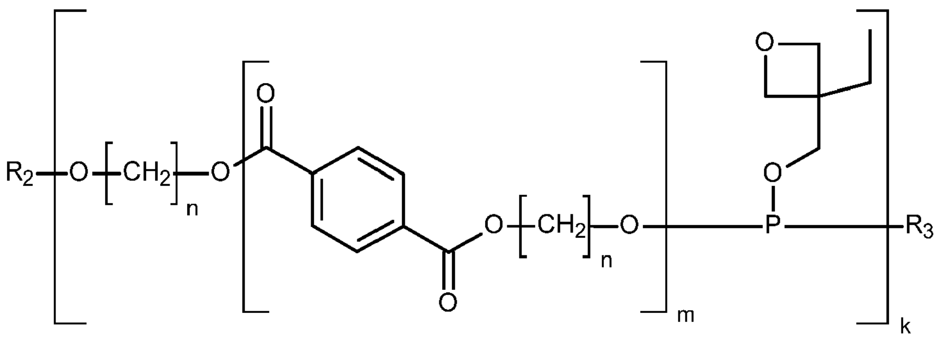

(I)

worin n für natürliche Zahlen von 2 bis 12 steht,
m für 0 oder für eine Zahl größer 0 bis 30 steht,
k für eine Zahl im Bereich von 1 bis 200 steht,
$R_2$ für einen kovalent gebundenen Rest,

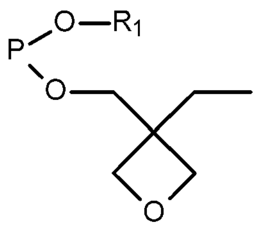
,
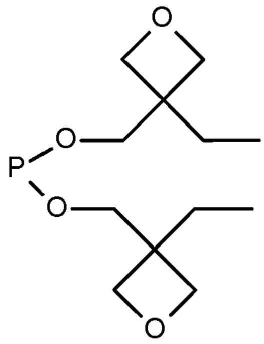
,
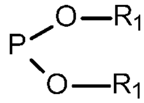

oder Wasserstoff steht, und
$R_3$ für einen kovalent gebundenen Rest O-H, O-$R_1$,

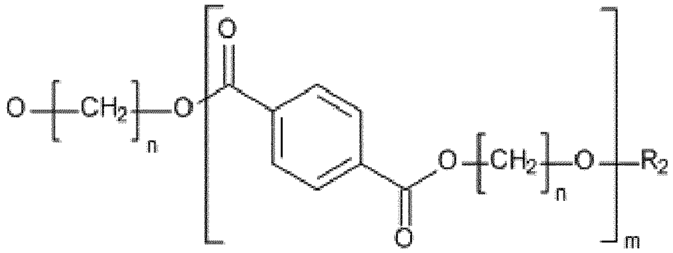

oder

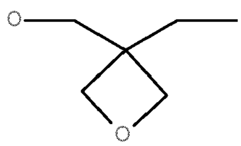

steht, worin
n, m, $R_2$ die oben genannten Bedeutungen haben und
$R_1$ für geradkettiges und/oder verzweigtes und/oder substituiertes $C_1$-$C_{10}$-Alkyl, Aryl-$C_1$-$C_{10}$-Alkyl und/oder für Aryl steht,
mit dem Polymer bzw. mit dem Thermoplasten bzw. dem Polyester bzw. mit dem Polyalkylenterephthalat, mit dem Polycarbonat oder mit dem Polyalkylenterephthalat-Polycarbonat-Blend und gegebenenfalls weiteren Komponenten in wenigstens einem Mischwerkzeug mischt und die dabei entstehende Formmasse enthaltend wenigstens die Komponenten

A) Polymer bzw. Thermoplast(en) bzw. Polyester bzw. Polyalkylenterephthalat, Polycarbonat oder Polyalkylenterephthalat-Polycarbonat-Blend und
B) Phosphorigsäureester

im Spritzguss, durch Extrusion oder Blasformen zu Erzeugnissen, vorzugsweise zu Erzeugnissen der Elektronikindustrie, der Elektroindustrie, in Haushaltswaren, in der Kfz-Industrie, in der Medizintechnik, in der Telekommunikationsindustrie oder in der Elektromobilität verarbeitet.

**16.** Verfahren gemäß Anspruch 15, **dadurch gekennzeichnet, dass** als Komponente B) das Kondensationsprodukt von Triphenylphosphit, Ethyl-3-hydroxymethyloxetan und Bis(2-hydroxyethyl)terephthalat oder das Kondensationsprodukt von Triphenylphosphit, Ethyl-3-hydroxymethyloxetan und 1,4-Butandiol eingesetzt wird.

Europäisches Patentamt
European Patent Office
Office européen des brevets

# EUROPÄISCHER RECHERCHENBERICHT

Nummer der Anmeldung
EP 21 16 8539

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 794 629 A (EIMERS E ET AL) 26. Februar 1974 (1974-02-26) * Spalte 3, Zeilen 22-28, 3-32, 35-37 * ----- | 1-16 | INV. C07F9/141 C08K5/524 C08K5/529 |
| X | EP 0 150 497 A2 (BAYER AG [DE]) 7. August 1985 (1985-08-07) * Seite 4, Zeilen 3-13,16-18 * ----- | 1-16 | |
| X | US 4 066 617 A (RAWLINGS HERBERT L ET AL) 3. Januar 1978 (1978-01-03) * Spalte 2, Zeile 1 * ----- | 1-16 | |
| | | | RECHERCHIERTE SACHGEBIETE (IPC) |
| | | | C07F C08K |

Der vorliegende Recherchenbericht wurde für alle Patentansprüche erstellt

1

| Recherchenort | Abschlußdatum der Recherche | Prüfer |
|---|---|---|
| München | 27. September 2021 | Lohner, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 16 8539

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2021

| Im Recherchenbericht angeführtes Patentdokument | Datum der Veröffentlichung | Mitglied(er) der Patentfamilie | Datum der Veröffentlichung |
|---|---|---|---|
| US 3794629 A | 26-02-1974 | BE 787357 A | 09-02-1973 |
| | | CA 1005945 A | 22-02-1977 |
| | | DE 2140207 A1 | 15-02-1973 |
| | | FR 2148648 A1 | 23-03-1973 |
| | | GB 1382525 A | 05-02-1975 |
| | | IT 961910 B | 10-12-1973 |
| | | JP S4826891 A | 09-04-1973 |
| | | JP S5312948 B2 | 06-05-1978 |
| | | NL 7210855 A | 13-02-1973 |
| | | US 3794629 A | 26-02-1974 |
| EP 0150497 A2 | 07-08-1985 | DE 3400238 A1 | 18-07-1985 |
| | | EP 0150497 A2 | 07-08-1985 |
| | | JP S60158250 A | 19-08-1985 |
| US 4066617 A | 03-01-1978 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10231334 A1
- US 4035958 A
- US 4176224 A
- DE 900270 A1
- US 3028635 A
- US 3062781 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 105550 A
- US 3288864 A
- JP 60035150 A
- US 4334106 A
- DE 1031512 A
- US 3442864 A
- JP 47014742 A
- US 5399659 A
- DE 19539290 A
- DE 4236122 A
- WO 9817720 A
- DE 2035390 A
- DE 2248242 A
- US 4937285 A
- DE 3704657 A
- DE 3704655 A
- DE 3631540 A
- DE 3631539 A


### In der Beschreibung aufgeführte Nicht-Patentliteratur


- *CHEMICAL ABSTRACTS,* 649560-74-7
- *CHEMICAL ABSTRACTS,* 53184-75-1
- **R.D.MAIER ; M.SCHILLER.** Handbuch Kunststoff-Additive. Hanser Verlag, 2016, 33
- Kunststoff-Handbuch. Karl-Hanser-Verlag, 1973, vol. VIII, 695 ff
- Chemistry and Physics of Polycarbonates. **H. SCHNELL.** Polymer Reviews. Interscience Publishers, 1964, vol. 9, 77-98
- Chemistry and Physis of Polycarbonates. **H. SCHNELL.** Polymer Reviews. Interscience Publishers, 1964, vol. 9, 31-76
- Polycarbonates. **D. FREITAG ; U. GRIGO ; P. R. MÜLLER ; H. NOUVERTNE.** Encyclopedia of Polymer Science and Engineering. 1988, vol. 11, 648-718
- Polycarbonate. **U. GRIGO ; K. KIRCHER ; P.R. MÜLLER.** Kunststoff-Handbuch, Band 3/1, Polycarbonate, Polyacetale, Polyester, Celluloseester. Carl Hanser Verlag München, 1992, vol. 3/1, 117-299
- Synthesis of Poly(estercarbonate) Copolymers. **D.C. PREVORSEK ; B.T. DEBONA ; Y. KESTEN.** Journal of Polymer Science, Polymer Chemistry Edition. Corporate Research Center, Allied Chemical Corporation, 1980, vol. 19, 75-90
- Chemistry and Physics of Polycarbonates. **H. SCHNELL.** Polymer Reviews. Interscience Publishers, 1964, vol. 9, 44-51
- *CHEMICAL ABSTRACTS,* 101-02-0
- *CHEMICAL ABSTRACTS,* 3047-32-3
- *CHEMICAL ABSTRACTS,* 107-21-1
- *CHEMICAL ABSTRACTS,* 504-63-2
- *CHEMICAL ABSTRACTS,* 110-63-4
- *CHEMICAL ABSTRACTS,* 10-63-4
- *CHEMICAL ABSTRACTS,* 100-21-0
- *CHEMICAL ABSTRACTS,* 120-61-6
- *CHEMICAL ABSTRACTS,* 959-26-2
- *CHEMICAL ABSTRACTS,* 3644-98-2
- *CHEMICAL ABSTRACTS,* 23358-95-4
- Chemie Ingenieur Technik. Wiley-VCH Verlags GmbH, Marz 2000, vol. 72, 273-276
- **ULLMANN.** Enzyklopädie der Technischen Chemie. 1980, vol. 19, 280-300
- **M. HOFFMANN ; H. KRÖMER ; R. KUHN.** Polymeranalytik I und II. Georg Thieme-Verlag, 1977

- **W. SCHOLTAN ; H. LANGE.** *Kolloid, Z. und Z. Polymere,* 1972, vol. 250, 782-1796
- **GÄCHTER, MÜLLER.** Kunststoff- Additive. Hanser-Verlag, 1989
- **THIELEN ; HARTWIG ; GUST.** Blasformen von Kunststoffhohlkörpern. Carl Hanser Verlag, 2006, 127-129